# EUROPÄISCHE PATENTANMELDUNG

(11) **EP 3 093 533 A2**
(43) Veröffentlichungstag der Anmeldung: **16.11.2016**
(21) Anmeldenummer: 16166768.8
(22) Anmeldetag: 25.04.2016
(51) Int. Cl.: F16H 57/04, F16H 61/00

(54) **KRAFTFAHRZEUG-ANTRIEBSSTRANG UND VERFAHREN ZU DESSEN BETREIBEN**

(30) Priorität: 11.05.2015 DE 102015107362
(71) Anmelder: GETRAG Getriebe- und Zahnradfabrik Hermann Hagenmeyer GmbH & Cie KG, 74199 Untergruppenbach (DE)
(72) Erfinder: Seufert, Martin, 71711 Steinheim (DE); Schweiher, Mark, 74348 Lauffen (DE); Loskot, Pawel, 74389 Cleebronn (DE); Geiger, Julia, 71576 Burgstetten (DE); Rühle, Günter, 74369 Löchgau (DE); Rothvoss, Stefan, 74211 Leingarten (DE); Wolf, Walter, 71672 Marbach (DE); Kohlhaas, Stefan, 46562 Voerde (DE); Flaig, Armin, 74523 Schwäbisch Hall (DE)
(74) Vertreter: Witte, Weller & Partner Patentanwälte mbB

(57) **Zusammenfassung**

Kraftfahrzeug-Antriebsstrang (10) mit einer Kupplungsanordnung (14), mit einer Getriebeanordnung (16), die mehrere Gangstufen aufweist, die mittels einer Schaltanordnung (26) ein- und auslegbar sind, und mit einer Hydraulikanordnung (40) zum Betätigen der Schaltanordnung (26) und zum Bereitstellen von Kühlfluid, wobei die Hydraulikanordnung (40) eine Pumpenanordnung (60) aufweist, die mittels eines einzelnen Elektromotors (62) angetrieben ist und einen ersten Pumpenanschluss (64) und einen zweiten Pumpenanschluss (66) aufweist, wobei der erste Pumpenanschluss (64) mit einer SchaltBetätigungsanordnung (28) verbindbar oder verbunden ist, um die Schaltanordnung (26) zu betätigen.

Dabei ist der zweite Pumpenanschluss (66) mit einer zu kühlenden Anordnung (14; 16, 32) verbindbar oder verbunden, um der zu kühlenden Anordnung (14; 16, 32) Kühlfluid bereitzustellen.

## Beschreibung

Die vorliegende Erfindung betrifft einen Kraftfahrzeug-Antriebsstrang mit einer Kupplungsanordnung, mit einer Getriebeanordnung, die mehrere Gangstufen aufweist, die mittels einer Schaltanordnung ein- und auslegbar sind, und mit einer Hydraulikanordnung zum Betätigen der Schaltanordnung und zum Bereitstellen von Kühlfluid, wobei die Hydraulikanordnung eine Pumpenanordnung aufweist, die mittels eines einzelnen Elektromotors angetrieben ist und die einen ersten Pumpenanschluss und einen zweiten Pumpenanschluss aufweist, wobei der erste Pumpenanschluss mit einer Schalt-Betätigungsanordnung verbindbar oder verbunden ist, um die Schaltanordnung zu betätigen. Ferner betrifft die vorliegende Erfindung Verfahren zum Betreiben eines derartigen Kraftfahrzeug-Antriebsstranges, und eine Hydraulikanordnung hierfür.

Moderne Kraftfahrzeug-Antriebsstränge sind in der Regel sowohl hinsichtlich der Getriebeanordnung als auch hinsichtlich der Kupplungsanordnung automatisiert ausgeführt. Hierzu werden Aktuatoren verwendet, die elektromotorisch, pneumatisch, oder auch hydraulisch ausgeführt sein können. Hydraulische Aktuatoranordnungen haben den Vorteil, dass Hydraulikkreise zum Betreiben eines Antriebsstranges häufig ohnehin vorhanden sind, bspw. um eine Getriebeanordnung zu schmieren oder eine Kupplungsanordnung wie eine nasslaufende Lamellenkupplungsanordnung zu kühlen. Ferner können Aktuatoren, die hydraulisch arbeiten, fein geregelt werden, was insbesondere bei der Betätigung einer Kupplungsanordnung bedeutsam ist.

Das Regeln eines Hydraulikdruckes für einen Kupplungsaktuator (bspw. ein Kupplungszylinder) erfolgt bislang in der Regel mittels folgendem Aufbau. Eine Pumpe, die als Nebenaggregat an einen Verbrennungsmotor angeschlossen ist, wird während des Betriebes des Kraftfahrzeuges ständig angetrieben. Aufgrund der während des Betriebes ständig schwankenden Drehzahlen des Verbrennungsmotors ist es dabei notwendig, die Pumpe so auszulegen, dass sie auch bei niedrigen Drehzahlen eine hinreichende hydraulische Leistung bereitstellen kann. Gegebenenfalls ist ein Hydraulikspeicher vorzusehen. Ein Druckanschluss einer solchen Pumpenanordnung ist in der Regel mit einem Druckregelventil in Form eines Proportionalventils verbunden, mittels dessen ein sog. Leitungsdruck erzeugt wird. Steuerdrücke zur Regelung bspw. eines Druckes für eine Kupplungsbetätigung werden dann von dem Leitungsdruck abgeleitet, in der Regel mittels jeweiliger weiterer Regelventile in Form von Proportionalventilen. Derartige Proportionalventile haben den Nachteil, dass sie teuer sind. Ferner erfordern derartige Proportionalventile hohe Reinheitsanforderungen bei der Montage einer solchen Hydraulikanordnung. Bei Hydraulikanordnungen der oben beschriebenen Art ist es ferner von Nachteil, dass die Pumpe ständig angetrieben wird, was den Wirkungsgrad der Hydraulikanordnung verringert und die Lebensdauer verkürzt.

Das Dokument EP 1 236 918 B1 offenbart einen Hydraulikkreis für eine Reibkupplung. Der Hydraulikkreis beinhaltet eine Pumpe, die mittels eines Elektromotors antreibbar und hinsichtlich ihrer Drehzahl regelbar ist. Ein Druckanschluss der Pumpe ist direkt mit einem Kupplungs-Hydraulikzylinder verbunden, also ohne Zwischenschaltung eines Druckregelventils (Proportionalventils). Die Betätigung der Reibkupplung erfolgt feinfühlig dadurch, dass die Drehzahl der Pumpe geregelt wird. An der Verbindung zwischen Pumpe und Kupplungs-Hydraulikzylinder ist vorteilhafterweise ein Drucksensor vorgesehen, so dass der von der Pumpe über den Volumenstrom bereitgestellte Druck mittels der Drehzahl der Pumpe rückgekoppelt regelbar ist. Eine derartige Aktuatoranordnung wird nachstehend der Einfachheit halber als Pumpenaktuator bezeichnet. Zum Verbessern der Regelbarkeit ist es bspw. aus dem Dokument DE 10 2012 010 172 A1 bekannt, den Druckanschluss einer Pumpe eines Pumpenaktuators über eine Blende oder Leckage mit einem Niederdruckkreis zu verbinden. Durch diese Maßnahme kann die Regelbarkeit des Druckes verbessert werden.

Pumpenaktuatoren haben insgesamt den Vorteil, dass auch eine feinfühlige Regelung, wie sie bspw. für Lamellenkupplungen in Doppelkupplungsgetrieben notwendig ist, realisiert werden kann, ohne dass hierfür in einem Hydraulikkreis Proportionalventile vorgesehen werden müssen. Folglich kann ein solcher Hydraulikkreis kostengünstig realisiert werden. Durch die Tatsache, dass die Pumpe mittels eines Elektromotors angesteuert bzw. angetrieben wird, ist es zudem möglich, den Pumpenaktuator bedarfsweise zu betreiben, so dass auch der Wirkungsgrad in der Regel verbessert ist.

Aus dem oben genannten Dokument DE 10 2012 010 172 A1 ist es bekannt, für jede der Kupplungen einer Doppelkupplung einen solchen Pumpenaktuator vorzusehen, wobei die hierfür verwendeten Pumpen jeweils bidirektional betreibbar sind. In einer Hauptbetätigungsrichtung wird ein Druck zum Betätigen jeweiliger Kupplungszylinder aufgebaut. In der entgegengesetzten Drehrichtung dienen die Pumpenaktuatoren dazu, eine Parksperre zu betätigen bzw. zu verriegeln.

Aus dem Dokument DE 10 2011 117 488 A1 ist ein weiterer Antriebsstrang bekannt, der einen Hydraulikkreis aufweist. Der Hydraulikkreis beinhaltet einen Pumpenaktuator, der über ein Wegeventil (also kein Proportionalventil) entweder mit einem Kupplungsaktuator oder mit einem Schaltaktuator verbindbar ist. Bei einer weiteren Ausführungsform sind für eine Doppelkupplung zwei Pumpenaktuatoren vorgesehen, die über eine Ventilanordnung entweder mit jeweiligen Kupplungszylinder verbindbar sind, oder aber mit einem doppelt wirkenden Hydraulikzylinder.

Aus dem Dokument DE 10 2004 033 439 C5 ist ein Pumpenaktuator bekannt, der zwei Pumpen aufweist, die gemeinsam mittels eines Elektromotors angetrieben sind und unterschiedliche hydraulische Übersetzungen aufweisen.

Ferner ist aus dem Dokument DE 10 2011 118 574 A1 eine Kühlanordnung für einen Antriebsstrang bekannt, bei der eine bidirektionale Pumpe mittels eines Elektromotors angetrieben ist. Ein erster Pumpenanschluss ist mit einem Kupplungs-Kühlkreis verbunden. Der zweite Pumpenanschluss ist mit einem weiteren Kühlkreis verbunden. Die Kühlkreise können über eine Blendenanordnung miteinander verbunden sein.

Insgesamt besteht ein Wunsch danach, Hydraulikanordnungen der oben beschriebenen Art weiter zu vereinfachen, um Bauraum, Gewicht und/oder Kosten einzusparen. Ferner ist man bestrebt, den Wirkungsgrad derartiger Hydraulikanordnungen möglichst zu optimieren.

Aus dem Dokument DE 103 08 560 A1 ist ein automatisiertes Getriebe für Kraftfahrzeuge bekannt, wobei innerhalb des Getriebegehäuses seitlich neben dem Ölsumpf ein Behälter angeordnet ist, der als ein Ölreservoir für eine Hydraulikanordnung dient. Das Getriebe wird im Wege der Tauchschmierung mit Fluid versorgt. Spritzöl wird von oben in den Behälter geleitet. Eine Pumpe saugt Fluid von einem Boden des Behälters an und führt das Fluid unter Druck einer Ventilanordnung zu. Aus der Ventilanordnung bzw. dem damit verbundenen Hydraulikkreis rückgeführtes Fluid wird vorzugsweise ebenfalls in den Behälter von oben eingefüllt.

Aus dem Dokument DE 20 2014 102 985 U1 ist ein weiteres Getriebe mit einem Fluidbeaufschlagungssystem bekannt, wobei das Fluidbeaufschlagungssystem einen Fluidsumpf aufweist und dazu ausgelegt ist, wenigstens eine Kupplung geregelt mit Fluid aus dem Fluidsumpf zu beaufschlagen. Ferner beinhaltet die Fluidbeaufschlagungsvorrichtung wenigstens eine Pumpe und eine Leckage, wobei die Pumpe in zwei Richtungen betreibbar ist. Die Leckage beinhaltet ein Fluidreservoir, das dazu eingerichtet ist, um bei einem Betrieb der Pumpe in einer Saugrichtung ein Ansaugen von Luft zu unterdrücken.

In der entgegengesetzten Pumprichtung der Pumpe saugt diese Fluid über ein Fluidfilter aus dem Fluidsumpf und führt das Fluid der Kupplung zu, um diese zu betätigen.

Vor diesem Hintergrund ist es eine Aufgabe der Erfindung, einen verbesserten Kraftfahrzeug-Antriebsstrang, verbesserte Verfahren zu dessen Betreiben sowie eine Hydraulikanordnung für einen Kraftfahrzeug-Antriebsstrang anzugeben.

Die obige Aufgabe wird bei dem eingangs genannten Kraftfahrzeug-Antriebsstrang dadurch gelöst, dass der zweite Pumpenanschluss mit einer zu kühlenden Anordnung verbindbar oder verbunden ist, um der zu kühlenden Anordnung Kühlfluid bereitzustellen.

Ferner wird die obige Aufgabe gelöst durch ein Verfahren zum Betreiben eines erfindungsgemäßen Kraftfahrzeug-Antriebsstranges, mit dem Schritt, durch Wechseln der Drehrichtung des Elektromotors Fluid der Schalt-Betätigungsanordnung oder der zu kühlenden Anordnung bereitzustellen.

Bei dem erfindungsgemäßen Kraftfahrzeug-Antriebsstrang ist es möglich, eine Pumpenanordnung mittels eines einzelnen Elektromotors anzutreiben, wobei diese Anordnung mit nur einem einzelnen Elektromotor dazu verwendet werden kann, um vorzugsweise sämtliche Gangstufen der Getriebeanordnung ein- und auszulegen, sowie ferner dazu, eine zu kühlende Anordnung des Antriebsstranges zu kühlen. Die Verbindung zwischen den Pumpenanschlüssen und der Schalt-Betätigungsanordnung bzw. der zu kühlenden Anordnung kann eine direkte Verbindung sein. Unter einer direkten Verbindung wird vorliegend eine Verbindung verstanden, an der kein Druckregelventil in Form eines Proportionalventils angeschlossen ist. Die direkte Verbindung kann jedoch ein Wegeventil beinhalten, das nicht als Proportionalventil ausgeführt ist.

Da die Hydraulikanordnung für die genannten Funktionen nur einen einzelnen Elektromotor verwendet, ergeben sich insgesamt Bauraum-, Kosten- und Gewichtsvorteile. Zudem kann der Aufwand in einem Getriebesteuergerät reduziert werden, da insbesondere nur eine einzelne Motorendstufe für den einzelnen Elektromotor vorzusehen ist. Auch die Verkabelung kann vereinfacht werden.

Eine Druck- oder Volumenstromregelung erfolgt so, dass eine Änderung dieser Zustandsgrößen nur durch Verändern der Drehzahl des Elektromotors erfolgt, also nicht über Ansteuerung eines zwischengeschalteten Ventils. Der Begriff "Kühlfluid" ist vorliegend breit zu verstehen. Kühlfluid ist vorzugsweise ein Hydraulikfluid, das in Form eines Volumenstromes bereitgestellt wird, um eine Anordnung zu kühlen und/oder zu schmieren. Der Druck des Kühlfluides spielt dabei vorzugsweise keine Rolle. Stattdessen wird beim Bereitstellen von Kühlfluid dessen Volumenstrom gesteuert, vorzugsweise geregelt. Der Volumenstrom lässt sich dabei in der Regel einfach ermitteln, indem die Förderleistung der Pumpe mit der Drehzahl bzw. den Umdrehungen des Elektromotors in Verbindung gesetzt wird. Diese Größen sind vergleichsweise einfach in einer Steueranordnung zu speichern oder zu verarbeiten. Bei der Betätigung der Schaltanordnung kann ggf. auch auf einen Volumenstrom bzw. ein Hydraulikvolumen abgestellt werden. Es ist hierbei jedoch auch möglich, auf den Schaltweg oder den Druck abzustellen, also bspw. in der Verbindung zu der Schalt-Betätigungsanordnung einen Weg- bzw. Drucksensor vorzusehen, über den dann der Weg bzw. Druck regelbar ist.

Die Schaltanordnung beinhaltet vorzugsweise Schaltkupplungspakete, die aus einer oder zwei Synchron-Schaltkupplungen aufgebaut sind und die mittels eines einfach wirkenden oder mittels eines doppelt wirkenden Hydraulikzylinders betätigbar sind. Von besonderem Vorzug ist es dabei, wenn die Schaltanordnung für jedes Schaltkupplungspaket einen eigenen Hydraulikzylinder aufweist, der doppelt wirkend ist. Die Position eines Kolbens eines solchen Zylinders ist dabei vorzugsweise über einen Positionssensor ermittelbar, jedenfalls hinsichtlich der Endstellungen. Für diesen Fall ist es bevorzugt, wenn eine Steuerung der Positionen dieser Zylinder nicht über eine Druckregelung erfolgt, sondern über eine Volumenstromregelung oder, im einfachsten Fall, über eine Wegregelung, derart, dass die Pumpenanordnung solange angetrieben wird, bis eine gewünschte Endlage eines Hydraulikzylinders erreicht ist.

Die zu kühlende Anordnung ist vorzugsweise die Kupplungsanordnung, bei der es sich vorzugsweise um eine nasslaufende Reibkupplung handelt, insbesondere eine Lamellenkupplung. Die Kupplungsanordnung kann eine einfache Kupplung sein, kann jedoch auch eine Doppelkupplungsanordnung sein. Die Getriebeanordnung kann ein einfaches Getriebe wie ein automatisiertes manuelles Getriebe sein, ist jedoch vorzugsweise ein Doppelkupplungsgetriebe mit zwei Teilgetrieben.

Alternativ oder zusätzlich ist es möglich, Kühlfluid an dem zweiten Pumpenanschluss für eine oder mehrere weitere zu kühlende Anordnungen bereitzustellen, bspw. die Getriebeanordnung selbst (auch dort ist in der Regel ein Getriebefluid wie ein Hydrauliköl enthalten, das in manchen Fällen gekühlt wird). Eine weitere zu kühlende Anordnung kann bspw. eine elektrische Maschine sein, die in dem Antriebsstrang als Antriebsmotor verwendet wird, oder in einer anderen Betriebsart als Generator. Diese Aufzählung von zu kühlenden Anordnungen soll jedoch nicht abschließend sein.

Die Pumpenanordnung ist mittels des einzelnen Elektromotors vorzugsweise so angetrieben, dass in einer ersten Drehrichtung des Elektromotors Fluid an dem ersten Pumpenanschluss bereitgestellt wird, und in einer zweiten Drehrichtung des Elektromotors Fluid an dem zweiten Pumpenanschluss bereitgestellt wird.

Bei automatisierten Getrieben, die Schaltanordnungen in Form von Synchron-Schaltkupplungen beinhalten, erfolgen Schaltvorgänge in der Regel zeitlich versetzt zu solchen Zuständen, bei denen eine Reibkupplung der Kupplungsanordnung im Schlupf betrieben wird. Bei einem Doppelkupplungsgetriebe werden Gangstufen in einem inaktiven Teilgetriebe häufig vorgewählt. Mit anderen Worten kann ein Gangwechsel erfolgen, indem in einem solchen Doppelkupplungsgetriebe eine Reibkupplung geöffnet wird und die andere Reibkupplung geschlossen wird, wobei hier zur Vermeidung eines Zugkrafteinbruches diese Kupplungen in der Regel schlupfend betrieben werden, was zu Wärmeerzeugung führt. Folglich ist während solcher Schlupf-Phasen der Reibkupplung bzw. den Reibkupplungen Kühlfluid bereitzustellen. Nach einem solchen Wechsel der Teilgetriebe kann anschließend in dem dann inaktiven Teilgetriebe wieder eine Gangstufe vorgewählt werden. Hierbei befinden sich die Reibkupplungen eines Doppelkupplungsgetriebes in der Regel entweder in einem geöffneten oder in einem geschlossenen Zustand, so dass diese keine hohe Kühlleistung benötigen. Jedenfalls hat sich erfindungsgemäß gezeigt, dass es möglich ist, die Kühlung der zu kühlenden Anordnung für den Zeitraum einer Schalt-Betätigung zu unterbrechen. In manchen Ausführungsformen ist es auch möglich, einen Teilvolumenstrom abzuzweigen, so dass ein Kühlvorgang nicht unterbrochen wird.

Die Aufgabe wird somit vollkommen gelöst.

Gemäß einer besonders bevorzugten Ausführungsform weist die Schalt-Betätigungsanordnung wenigstens einen Hydraulikzylinder auf, der über eine Verteilerventilanordnung mit dem ersten Pumpenanschluss verbunden ist.

Die Verteilerventilanordnung ist vorzugsweise eine Wegeventilanordnung und beinhaltet vorzugsweise keine Proportionalventile.

Durch Betätigen der Verteilerventilanordnung, was vorzugsweise elektromechanisch erfolgt, kann der erste Pumpenanschluss vorzugsweise alternativ mit Anschlüssen an dem einen oder den mehreren Hydraulikzylindern verbunden werden. Sofern die Schalt-Betätigungsanordnung mehr als zwei Hydraulikzylinder aufweist, ist die Verteilerventilanordnung entsprechend so ausgelegt, dass der erste Pumpenanschluss jeweils mit einem der Hydraulikzylinder verbindbar ist. Jedem Hydraulikzylinder ist dabei vorzugsweise ein Schaltkupplungspaket zugeordnet, das eine oder zwei Synchron-Schaltkupplungen oder Klauen-Schaltkupplungen beinhalten kann, wie sie zum Ein- und Auslegen von Gangstufen in Getrieben verwendet werden, die in Vorgelegebauweise ausgeführt sind.

Die Verteilerventilanordnung kann vorzugsweise auch einen Ausgangsanschluss aufweisen, der einer Parksperrenanordnung zugeordnet ist, derart, dass Hydraulikanordnung auch dazu verwendet werden kann, um eine Parksperre zu betätigen. Die Parksperrenanordnung kann dabei vorzugsweise einen einfach wirkenden Hydraulikzylinder beinhalten, der die Parksperrenanordnung in eine Sperrposition oder in eine Freigabeposition vorspannt.

Ferner ist es in manchen Ausführungsformen vorteilhaft, wenn die Verteilerventilanordnung einen weiteren Ausgangsanschluss beinhaltet, der bspw. mit einem Trockensumpftank verbunden ist, insbesondere zu dessen Schnellbefüllung.

Die Verteilerventilanordnung ist vorzugsweise eine Wegeventilanordnung, die aus einem oder mehreren Wegeventilen realisiert sein kann. Von besonderem Vorzug ist es, wenn die Verteilerventilanordnung ein Drehschieberventil aufweist.

Über eine solche Verteilerventilanordnung lassen sich auf kompakte Art und Weise mehrere Hydraulikzylinder und ggf. weitere Funktionen ansteuern, wobei das Drehschieberventil vorzugsweise einen Drehschieber aufweist, der mittels eines Drehschiebermotors (Elektromotor) angetrieben ist. Der Drehschiebermotor ist vorzugsweise ein ausschließlich für den Betrieb des Drehschieberventils vorgesehener Motor. Das Drehschieberventil weist einen oder zwei Druckanschlüsse auf, und weist vorzugsweise wenigstens vier, insbesondere wenigstens acht und in der Regel nicht mehr als zwanzig Steueranschlüsse auf, um die verschiedenen Funktionen zu realisieren. Einem Hydraulikzylinder sind dabei vorzugsweise zwei Steueranschlüsse bzw. Ausgangsanschlüsse eines solchen Drehschieberventils zugeordnet.

Insgesamt ist es vorteilhaft, wenn die Pumpenanordnung eine einzelne Pumpe aufweist, die so ausgebildet ist, dass in einer ersten Drehrichtung des Elektromotors Fluid an dem ersten Pumpenanschluss bereitgestellt wird und in einer zweiten Drehrichtung Fluid an dem zweiten Pumpenanschluss bereitgestellt wird.

Eine Pumpenanordnung dieser Bauart ist kostengünstig realisierbar, da nur eine einzige Pumpe in der Pumpenanordnung vorhanden ist. Die Pumpenanordnung ist hierbei funktional so ausgebildet, dass in der ersten Drehrichtung des Elektromotors Fluid ausschließlich an dem ersten Pumpenanschluss bereitgestellt wird, und der zweiten Drehrichtung Fluid ausschließlich an dem zweiten Pumpenanschluss bereitgestellt wird. Die einzelne Pumpe ist vorzugsweise mittels eines einzelnen Pumpen-Rotorsatzes realisierbar.

Dabei kann die einzelne Pumpe eine bidirektionale Pumpe sein, die über eine Ventilanordnung mit einem Fluidreservoir verbunden ist und/oder über eine Ventilanordnung mit der Schalt-Betätigungsanordnung und/oder der zu kühlenden Anordnung verbunden ist.

Die Ventilanordnungen können dabei insbesondere Rückschlagventilanordnungen sein. Die Rückschlagventilanordnungen können dafür sorgen, dass je nach Drehrichtung der bidirektionalen Pumpe entweder nur an dem ersten oder nur an dem zweiten Pumpenanschluss Fluid bereitgestellt wird.

In einer alternativen Ausführungsform weist die Pumpe einen dritten Pumpenanschluss auf, der mit einem Fluidreservoir verbunden ist, und/oder die einzelne Pumpe ist als Umschaltpumpe ausgebildet, die in Abhängigkeit von der Umschaltstellung eines Umschaltgliedes wie eines Umschaltringes Fluid entweder an dem ersten Pumpenanschluss oder an dem zweiten Pumpenanschluss bereitstellt.

Sofern die Pumpe einen dritten Pumpenanschluss aufweist, ist es möglich, dass der erste und der zweite Pumpenanschluss jeweils nur als Druckanschlüsse wirken, während der dritte Pumpenanschluss dann ein Sauganschluss ist, der mit dem Fluidreservoir verbunden ist.

Bei Ausbildung der Pumpe als Umschaltpumpe ist es bevorzugt, wenn diese als Innenzahnradpumpe ausgebildet ist, die ein Ringelement aufweist, das in einem Pumpengehäuse beweglich gelagert und zwischen einer ersten und einer zweiten Position verschenkbar ist. Das Verschwenken des Ringelementes kann dabei durch fluidische Reibung erfolgen, je nach Drehrichtung des angetriebenen Rotorelementes der Innenzahnradpumpe, es kann jedoch auf andere Art und Weise umgeschaltet werden.

Bei den obigen Ausführungsformen ist die Pumpenanordnung vorzugsweise durch eine einzelne Pumpe gebildet. Gemäß einer alternativen bevorzugten Ausführungsform weist die Pumpenanordnung eine erste Pumpe und eine zweite Pumpe auf, die gemeinsam von dem Elektromotor angetrieben sind.

Die erste und die zweite Pumpe werden vorzugsweise gegensinnig angetrieben, also in unterschiedlichen Drehrichtungen, so dass bei einer Drehrichtung des Elektromotors entweder der erste Pumpenanschluss oder der zweite Pumpenanschluss mit Fluid versorgt wird, während bei der entgegengesetzten Drehrichtung des Elektromotors der andere Pumpenanschluss mit Fluid versorgt wird. Die Pumpen können identisch aufgebaut sein, weisen jedoch vorzugsweise unterschiedliche Rotorsätze auf. Eine der zwei Pumpen ist vorzugsweise zur Einrichtung eines hohen Druckes bei kleinem Volumenstrom ausgelegt, während die andere Pumpe vorzugsweise zur Einrichtung eines hohen Volumenstromes bei geringem Druck ausgelegt ist.

Vorzugsweise ist bei der Ausgestaltung mit zwei Pumpen eine Rückflussverhinderungsvorrichtung vorgesehen, die verhindert, dass die Pumpenanordnung Fluid aus der Schalt-Betätigungsanordnung und/oder aus der zu kühlenden Anordnung zurücksaugt.

Dabei ist es vorteilhaft, wenn die Rückflussverhinderungsvorrichtung eine Freilaufanordnung aufweist, die eine richtungsabhängige Freilauffunktion zwischen dem Elektromotor und der ersten Pumpe und/oder zwischen dem Elektromotor und der zweiten Pumpe einrichtet.

Über eine derartige Freilaufanordnung kann bspw. in der ersten Drehrichtung ausschließlich die erste Pumpe und in der zweiten Drehrichtung ausschließlich die zweite Pumpe angetrieben werden. Mit anderen Worten kann eine solche Rückflussverhinderungsvorrichtung auch als eine Art Drehrichtungsverteileinrichtung bezeichnet werden, die mit der Freilaufanordnung jeweils nur eine Drehrichtung für die beiden am Elektromotor angeschlossenen Pumpen zulässt.

Gemäß einer weiteren bevorzugten Ausführungsform weist die Rückflussverhinderungsvorrichtung eine Bypassventilanordnung auf, die eine richtungsabhängige Bypassfunktion für die erste Pumpe und/oder für die zweite Pumpe einrichtet.

Wenn bei dieser Ausführungsform bspw. die erste Pumpe von dem Elektromotor angetrieben wird, um an dem ersten Pumpenanschluss Fluid bereitzustellen, wird die zweite Pumpe zwar auch angetrieben, jedoch wird ein an dem zweiten Pumpenanschluss bereitgestellter Volumenstrom über die Bypassventilanordnung direkt wieder dem Sauganschluss der zweiten Pumpe bereitgestellt, so dass eine Art hydraulischer Kurzschluss realisiert wird.

Während es, wie oben beschrieben, vorteilhaft ist, wenn eine Rückflussverhinderungsvorrichtung vorgesehen ist, kann in manchen Ausführungsformen jedoch auch vorgesehen sein, dass die Pumpenanordnung so antreibbar ist, dass Fluid zum Zweck der Entlüftung aus der Schalt-Betätigungsanordnung und/oder aus der zu kühlenden Anordnung abgesaugt wird.

Bei dieser Ausführungsform wird in Kauf genommen, dass eine Entlüftungsfunktion realisiert wird, und ggf. Luft in den Ölsumpf gefördert wird, wenn ein Rückwärtsbetrieb stattfindet. Dies kann jedoch in manchen Ausführungsformen als unproblematisch erachtet werden. Das Gesamtsystem kann sich hierdurch vereinfachen, da auf Rückschlagventile (Bypassventilanordnung) ggf. verzichtet werden kann.

Wenn ein solches Betreiben entgegen der Förderrichtung dazu führt, dass Luft angesaugt und in den Tank gefördert wird, wird im Wesentlichen keine nennenswerte Leistung zum Betrieb der gerade nicht aktiven Pumpe erfordert. Hierbei kann bspw. eine Verteilerventilanordnung dazu ausgebildet sein, dass in einer solchen Ruhestellung ein Hydraulikfluidpfad geschaltet wird, der die luftansaugende Pumpe mit einem Fluidreservoir (Ölsumpf oder dergleichen) oder mit einem Luftraum (Getriebeinnenraum) verbindet.

Bei den obigen beschriebenen Fällen, bei denen entweder eine Rückflussverhinderungsvorrichtung vorgesehen ist, oder aber gerade ein Ansaugen von Luft realisiert wird, ist es vorteilhaft, dass für den Betrieb der gerade nicht aktiven Pumpe der zwei Pumpen der Pumpenanordnung keine nennenswerte Leistung erforderlich ist.

Generell ist es denkbar, dass der erste Pumpenanschluss ohne Zwischenschaltung eines Wegeventils mit der Schalt-Betätigungsanordnung verbunden ist, und/oder, dass der zweite Pumpenanschluss ohne Zwischenschaltung eines Wegeventils mit der zu kühlenden Anordnung verbunden ist.

Von besonderem Vorzug ist es jedoch, wenn der erste und/oder der zweite Pumpenanschluss über eine Vorschaltventilanordnung mit der Schalt-Betätigungsanordnung bzw. mit der zu kühlenden Anordnung verbunden ist, wobei die Vorschaltventilanordnung vorzugsweise so ausgebildet ist, dass in einer Vorschaltventilstellung der Vorschaltventilanordnung Fluid einem Betätigungsanschluss der Schalt-Betätigungsanordnung oder der zu kühlenden Anordnung bereitgestellt werden kann.

Die Vorschaltventilanordnung ist dabei vorzugsweise als Wegeventilanordnung ausgebildet, besonders bevorzugt als ein einzelnes Wegeventil, das bspw. als 5/2-Wegeventil ausgebildet sein kann. Ein solches Wegeventil ist vorzugsweise in eine Schaltstellung mechanisch vorgespannt und kann mittels eines Solenoids in die zweite Schaltstellung versetzt werden.

Vorzugsweise ist die Vorschaltventilanordnung so ausgebildet, dass der zweite Pumpenanschluss in einer ersten Vorschaltventilstellung mit der zu kühlenden Anordnung verbunden ist, in einer zweiten Vorschaltventilstellung jedoch von der zu kühlenden Anordnung getrennt ist.

Eine der Vorschaltventilanordnung vorzugsweise nachgeschaltete Verteilerventilanordnung der Schalt-Betätigungsanordnung weist hierbei vorzugsweise zwei Druckanschlüsse auf, von denen einer in der ersten Vorschaltventilstellung mit dem ersten Pumpenanschluss verbunden ist, und von denen der zweite in der zweiten Vorschaltventilstellung mit dem ersten Pumpenanschluss verbunden ist. Dies kann bei geeigneter Ausbildung der Verteilerventilanordnung, insbesondere in Form eines Drehschieberventils, dazu verwendet werden, dass Hydraulikzylinder der Schalt-Betätigungsanordnung in einer Vorschaltventilstellung in eine Schaltrichtung bewegt werden, und in der anderen Vorschaltventilstellung in die andere Schaltrichtung bewegt werden. Vorzugsweise schaltet also die Vorschaltventilanordnung die Bewegungsrichtung der Schaltkolben der Hydraulikzylinder, wenn mittels der Hydraulikanordnung Fluid an dem ersten Pumpenanschluss bereitgestellt wird (bspw. bei einer ersten Drehrichtung des Elektromotors).

Ferner ist es insgesamt vorteilhaft, wenn der zweite Pumpenanschluss über eine Strahlpumpe mit der zu kühlenden Anordnung verbunden ist.

Über eine derartige Strahlpumpe ist es möglich, mit einem relativ geringen Treibvolumenstrom aus dem zweiten Pumpenanschluss einen relativ hohen zusätzlichen Volumenstrom über einen Sauganschluss einer solchen Strahlpumpe anzusaugen. Diese Ausführungsform ist insbesondere dann bevorzugt, wenn die Pumpenanordnung durch eine einzelne bidirektionale Pumpe gebildet ist, die nicht auf die Bereitstellung eines hohen Volumenstromes optimiert ist.

Ferner ist es insgesamt vorteilhaft, wenn die Schalt-Betätigungsanordnung und die zu kühlende Anordnung über eine Blendenanordnung miteinander verbunden sind, derart, dass dann, wenn Fluid zu der Schalt-Betätigungsanordnung gefördert wird, über die Blendenanordnung ein Teil des Fluides zu der zu kühlenden Anordnung abgezweigt wird, und/oder umgekehrt.

Durch diese Maßnahme kann gewährleistet werden, dass bspw. auch dann, wenn Fluid an dem ersten Pumpenanschluss bereitgestellt wird, und kein Fluid an dem zweiten Pumpenanschluss bereitgestellt wird, dennoch ein Teil-Volumenstrom zu der zu kühlenden Anordnung geleitet wird, um eine Kühlung nicht vollständig zu unterbrechen.

Gemäß einem weiteren Aspekt der vorliegenden Erfindung wird die obige Aufgabe gelöst durch eine Kraftfahrzeugantriebsstrang-Hydraulikanordnung, insbesondere für einen Antriebsstrang der oben bezeichneten Art, mit einem Gehäuse, in dem ein Fluidsumpf zur Aufnahme eines Hydraulikfluides ausgebildet ist, und mit einer Verbraucherpumpe, die einen ersten Verbraucherpumpenanschluss zum Ansaugen von Hydraulikfluid und einen zweiten Verbraucherpumpenanschluss zum Abgeben von Hydraulikfluid an wenigstens einen Fluidverbraucher aufweist, wobei innerhalb des Fluidsumpfes eine Ansaugposition zum Ansaugen von Hydraulikfluid aus dem Fluidsumpf definiert ist, und wobei an dem Gehäuse eine Fluidkammeranordnung angeordnet ist, die einen Füllanschluss zum Befüllen der Fluidkammeranordnung mit Hydraulikfluid und wenigstens einen Entnahmeanschluss aufweist, der mit dem ersten Verbraucherpumpenanschluss verbunden ist, wobei eine Füllpumpenanordnung einen ersten Füllpumpenanschluss aufweist, der mit einer Ansaugeinrichtung verbunden ist, die an der Fluidsumpf-Ansaugposition angeordnet ist, und wobei die Füllpumpenanordnung einen zweiten Füllpumpenanschluss aufweist, der mit dem Füllanschluss der Fluidkammeranordnung verbunden ist.

Die erfindungsgemäße Hydraulikanordnung sieht folglich vor, dass neben einer Verbraucherpumpe, die beispielsweise zum Betätigen einer Anfahrkupplung, zum Betätigen einer Schaltkupplung oder dergleichen eingerichtet sein kann, eine weitere Pumpe in Form einer Füllpumpe vorgesehen ist, die den Zweck hat, die Fluidkammeranordnung zu befüllen. Durch die erfindungsgemäßen Maßnahmen kann zum einen der Wirkungsgrad verbessert werden. Denn mittels der Füllpumpe kann erreicht werden, dass Drehglieder wie Zahnräder innerhalb des Gehäuses nicht in den Fluidsumpf eintauchen und folglich kein Schleppmoment hervorrufen.

Vorzugsweise werden Komponenten des Kraftfahrzeug-Antriebsstranges, wie beispielsweise Zahnräder, Lager, etc., im Wege der Einspritzschmierung mit Fluid versorgt. Ein Eintauchen von Zahnrädern in einen Fluidsumpf ist folglich vorzugsweise nicht notwenig, jedenfalls nicht bei betriebsbereit erwärmtem Fluid.

Da sich das Volumen des Fluides bei Erwärmung erhöht, kann die Füllpumpe vorzugsweise auch dafür sorgen, dass eine solche Temperaturerhöhung und folglich Volumenzunahme kompensiert wird, wodurch wiederum der Wirkungsgrad gesteigert werden kann.

Ferner kann durch die erfindungsgemäße Hydraulikanordnung gewährleistet werden, dass die Verbraucherpumpe immer Fluid ansaugt und keine Luft ansaugt, insbesondere dann nicht, wenn sie dazu angetrieben wird, den Verbraucher mit Fluid zu versorgen. Bei einer Verbraucherpumpe, die eine Kupplung, wie eine Lamellenkupplung, mit Fluid versorgt, kann ein Ansaugen von Luft dazu führen, dass eine Schlupfregelung der Kupplung erheblich gestört wird, was zu unkomfortablen Anfahr- oder Schaltsituationen führen kann.

Der Füllstand in der Fluidkammeranordnung wird vorzugsweise im Betrieb ständig überwacht und wird vorzugsweise mittels der Füllpumpe geregelt, derart, dass gewährleistet ist, dass in einem Ansaugbereich innerhalb der Fluidkammeranordnung immer Hydraulikfluid vorhanden ist, das über den Entnahmeanschluss mit dem Verbraucherpumpenanschluss der Verbraucherpumpe verbunden ist.

Insgesamt kann folglich ein stabiler Systemdruck im Hydrauliksystem bereitgestellt werden. Dies gilt insbesondere dann, wenn beispielsweise die Ansteuerung eines Verbrauchers mittels der Verbraucherpumpe so erfolgt, dass dem Verbraucher zur Verfügung gestellter Druck nicht über eine separate Ventilanordnung geregelt wird, wie beispielsweise ein Proportionalventil, sondern durch Regeln der Drehzahl der Verbraucherpumpe. Die Verbraucherpumpe ist dabei vorzugsweise mit einem Elektromotor verbunden, der von einer Steuerung angesteuert wird, die den Fluiddruck am zweiten Verbraucherpumpenanschluss erfasst und aufgrund dessen die Drehzahl und/oder Drehrichtung der Verbraucherpumpe ansteuert, um den Druck an dem zweiten Verbraucherpumpenanschluss zu regeln. Bei derartigen Pumpenaktuatoren, bei denen der zweite Verbraucherpumpenanschluss direkt mit einem Aktuator zum Betätigen eines Verbrauchers verbunden ist, ist es von besonderem Vorteil, wenn ein Ansaugen von Luft verhindert werden kann.

Bei einem derartigen Pumpenaktuator ist es zudem von Vorteil, wenn der zweite Verbraucherpumpenanschluss über eine Leckage mit einem Niederdruckbereich verbunden ist.

Vorzugsweise kann diese Leckageleitung mit einem Einlass der Fluidkammeranordnung verbunden sein.

Durch das Bereitstellen der Fluidkammeranordnung können sekundäre Maßnahmen zum sicheren Ansaugen von Hydraulikfluid vermieden oder vom Aufwand her verringert werden, wie beispielsweise ein Erhöhen des Ölvolumens, Ölleitbleche oder Rückschlagklappen im Bereich der Ölwanne und/oder dem Getriebegehäuse.

Insgesamt kann folglich vorzugsweise wenigstens einer der folgenden Vorteile erreicht werden. Radsätze innerhalb eines Getriebes des mit einer solchen Hydraulikanordnung ausgestatteten Kraftfahrzeugantriebstranges können temperaturunabhängig im Trockensumpf laufen. Das Getriebeschleppmoment kann aufgrund von verringerter Ölpanscharbeit verringert sein, um Wirkungsgrad und folglich CO₂-Emissionen zu reduzieren. Ein luftfreies Ansaugen von Hydraulikfluid mittels der Verbraucherpumpe kann bei allen Fahrsituationen sichergestellt sein, um einen stabilen Systemdruck zu gewährleisten. Die Fluidmenge für den Kraftfahrzeugantriebstrang kann minimiert sein, um dessen Gewicht zu reduzieren.

Vorzugsweise wird folglich der Fluidsumpf, der beispielsweise als Boden eines Getriebegehäuses ausgebildet sein kann, oder als separate Ölwanne, im Wesentlichen noch als Sammelraum für Fluid genutzt, das von Radsätzen und/oder Kupplungen radial nach außen in Richtung hin zur Gehäusewand abspritzt und entlang einer solchen Gehäusewand aufgrund der Schwerkraft nach unten fließt. Die Fluidkammeranordnung kann wenigstens eine Kammer aufweisen, die im Fluidsumpf angeordnet ist, jedoch abgedichtet gegenüber diesem. Die Kammer kann jedoch auch außerhalb des Fluidsumpfes angeordnet sein, beispielsweise seitlich neben dem Fluidsumpf, vor dem Fluidsumpf, hinter dem Fluidsumpf, und/oder über wenigstens einem Radsatz. Die Begriffe vorne und hinten beziehen sich vorliegend auf eine Längsachse des Antriebsstranges, der im Fahrzeug quer oder längs eingebaut sein kann.

Die Füllpumpe saugt Fluid aus dem Fluidsumpf an. Dabei wird in Kauf genommen, dass die Füllpumpe auch ein Öl-Luftgemisch ansaugen kann, da dies keine Auswirkungen auf einen stabilen Systemdruck hat. Die Füllpumpe kann eine Verdrängerpumpe oder auch eine Saugstrahlpumpe sein.

Die Fluidkammeranordnung ist vorzugsweise mit einem Überlauf versehen, so dass in die Fluidkammeranordnung nicht überfüllt werden kann. Der Überlauf ist vorzugsweise so ausgebildet, dass ablaufendes Fluid in den Fluidsumpf geleitet wird.

Die Fluidkammeranordnung ist vorzugsweise eine abgeschlossene Kammeranordnung, die lediglich über Anschlüsse und über den Überlauf mit der Umgebung verbunden ist. Der Überlauf kann folglich auch verhindern, dass innerhalb der Fluidkammeranordnung ein Überdruck entsteht.

Die Fluidkammeranordnung kann einen Entnahmeanschluss aufweisen, der mit einem Verbraucherpumpenanschluss einer Verbraucherpumpe verbunden ist. Die Fluidkammeranordnung weist jedoch vorzugsweise mehrere Entnahmeanschlüsse auf, die mit jeweiligen Verbraucherpumpenanschlüssen einer Mehrzahl von Verbraucherpumpen verbunden sind. Die Verbraucherpumpen können beispielsweise Pumpen von Kupplungs-Pumpenaktuatoren sein, Pumpen von Gangschalt-Pumpenaktuatoren und/oder Pumpen von Einspritzschmiersystemen.

Durch die Abgeschlossenheit der Fluidkammeranordnung kann vorzugsweise erreicht werden, dass auch nach längerer Stillstandszeit des Kraftfahrzeugantriebsstranges die Fluidkammeranordnung nicht leerlaufen kann. Auch nach längerer Stillstandszeit kann für die Verbraucherpumpe folglich bei einem Neustart immer ein geeignetes Fluidvolumen zur Verfügung stehen.

Die Füllpumpe kann innerhalb der Hydraulikanordnung ausschließlich zu dem Zweck vorgesehen sein, die Fluidkammeranordnung zu befüllen.

Von besonderem Vorzug ist es jedoch, wenn die Füllpumpenanordnung ferner mit wenigstens einem Niederdruckkreislauf wie einem Schmier- oder Kühlkreislauf verbunden ist.

Die Füllpumpe dient folglich in diesem Fall nicht nur zum Befüllen der Fluidkammeranordnung, sondern kann auch Fluid für den Niederdruckkreislauf zur Verfügung stellen. Die Füllpumpenanordnung ist insbesondere dazu ausgebildet, einen Volumenstrom bereitzustellen. Vorzugsweise ist die Füllpumpenanordnung nicht dazu ausgebildet, nach der Art eines Pumpenaktuators einen bestimmten Druck bereitzustellen.

Besonders bevorzugt ist es hierbei, wenn die Füllpumpenanordnung dazu ausgebildet ist, einen Füllpumpenvolumenstrom bereitzustellen, der in einen Füllvolumenstrom und einen Niederdruckvolumenstrom aufgeteilt ist, und insbesondere dazu ausgebildet ist, einen Füllpumpenvolumenstrom bedarfsweise in einen Füllvolumenstrom und einen Niederdruckvolumenstrom aufzuteilen.

Der zweite Füllpumpenanschluss ist bei dieser Ausführungsform vorzugsweise über eine Verteilereinrichtung wie eine Ventilanordnung, insbesondere eine Wegeventilanordnung, mit dem Füllanschluss der Fluidkammeranordnung und mit dem Niederdruckkreislauf wie einem Schmier- oder Kühlkreislauf verbunden.

Die Fluidkammer kann eine oder mehrere Fluidkammern aufweisen.

Von besonderem Vorzug ist es, wenn die Fluidkammeranordnung wenigstens eine Fluidkammer aufweist, die oberhalb von wenigstens einem Radsatz eines Kraftfahrzeuggetriebes des Antriebsstranges angeordnet ist.

Folglich kann der Bauraum in optimaler Weise genutzt werden.

Die Fluidkammeranordnung kann eine Fluidkammer aufweisen, die aus Kunststoff hergestellt ist und an dem Getriebegehäuse befestigt ist. Die Fluidkammeranordnung kann ferner eine Fluidkammer aufweisen, die durch eine Tasche des Getriebegehäuses gebildet ist, wobei die Tasche vorzugsweise durch einen Fluidkammerdeckel abgedichtet ist. Die Tasche zur Ausbildung der Fluidkammer kann in dem Getriebegehäuse beispielsweise an einem axialen Ende oder an einer Seite oder an der Oberseite des Getriebegehäuses ausgebildet sein, derart, dass das Getriebegehäuse auf einfache Art und Weise in einem Gussverfahren hergestellt werden kann.

Die Fluidkammeranordnung kann dabei eine einzelne Fluidkammer aufweisen, die auf die eine oder andere Art ausgebildet ist. Die Fluidkammeranordnung kann jedoch auch mehrere Fluidkammern aufweisen, von denen eine durch das Getriebegehäuse, und eine andere aus Kunststoff hergestellt ist, um ein Beispiel zu nennen.

Demzufolge ist es von besonderem Vorteil, wenn an dem Gehäuse wenigstens zwei Fluidkammern angeordnet sind, die über einen Verbindungskanal miteinander verbunden sind.

Der Verbindungskanal hat vorzugsweise einen Querschnitt, der kleiner ist als der Querschnitt der ersten und/oder der zweiten Fluidkammer. Folglich kann erreicht werden, dass das Fluid, das durch den Verbindungskanal strömt, in der folgenden Kammer noch beruhigter ist als in der vorherigen Kammer.

Von besonderem Vorzug ist es, wenn eine erste Fluidkammer höher angeordnet ist als eine zweite Fluidkammer, wobei der Füllanschluss an der ersten Fluidkammer ausgebildet ist und/oder wobei ein Entnahmeanschluss an der zweiten Fluidkammer ausgebildet ist.

Bei dieser Ausführungsform kann erreicht werden, dass Fluid aufgrund von Schwerkraft von der ersten Fluidkammer in die zweite Fluidkammer strömt, beispielsweise über einen Verbindungskanal mit verringertem Querschnitt. Vorzugsweise ist wenigstens eine der Fluidkammern zu einem Radsatzraum hin entlüftet, innerhalb dessen Radsätze eines Getriebes angeordnet sind, also vorzugsweise hin zu dem Gehäuse, in dem der Fluidsumpf ausgebildet ist. Vorzugsweise sind sämtliche Fluidkammern auf diese Art und Weise entlüftet.

Gemäß einer weiteren Ausführungsform, die in Verbindung mit dem Oberbegriff des Anspruchs 13 eine eigene Erfindung darstellt, ist an dem Gehäuse eine Fluidkammeranordnung ausgebildet, aus der die Verbraucherpumpe Hydraulikfluid ansaugt, wobei die geometrische Form der Fluidkammeranordnung und/oder die Anordnung der Fluidkammeranordnung in Bezug auf das Gehäuse dazu eingerichtet ist, dass die Verbraucherpumpe keine Luft ansaugt.

Dies wird beispielsweise dadurch erreicht, dass bei einer Kammer der Fluidkammeranordnung, aus der das Hydraulikfluid für die Verbraucherpumpe angesaugt wird, eine Fläche des Querschnitts in horizontaler Richtung kleiner ist als Längsschnittflächen der Kammer in Richtungen senkrecht hierzu. Insbesondere ist die Querschnittsfläche in horizontaler Richtung vorzugsweise kleiner als die Hälfte der Längsschnittfläche in Richtung senkrecht hierzu, insbesondere kleiner als ein Viertel dieser Fläche. Vorzugsweise ist die Querschnittsfläche in horizontaler Richtung größer als ein Fünfzigstel der Längsschnittfläche.

Ferner wird die obige Aufgabe gelöst durch ein Verfahren zum Betreiben eines Kraftfahrzeugantriebsstranges, insbesondere eines Kraftfahrzeugantriebsstranges der erfindungsgemäßen Art, wobei der Kraftfahrzeugantriebsstrang eine Hydraulikanordnung mit einer Verbraucherpumpe zur Versorgung eines Verbrauchers mit Hydraulikfluid aufweist, insbesondere eine Hydraulikanordnung der erfindungsgemäßen Art, mit den Schritten, Hydraulikfluid aus einem Fluidsumpf des Kraftfahrzeugantriebsstranges anzusaugen, wobei der Fluidsumpf in einem Gehäuse des Kraftfahrzeugantriebsstranges ausgebildet ist, und Hydraulikfluid dem Verbraucher zuzuführen, wobei das Hydraulikfluid mittels einer Füllpumpe aus dem Fluidsumpf angesaugt und in eine Fluidkammeranordnung gefördert wird und wobei eine Verbraucherpumpe Hydraulikfluid aus der Fluidkammeranordnung angesaugt und dem Verbraucher zuführt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen Kraftfahrzeug-Antriebsstranges mit einer Hydraulikanordnung;
- Fig. 2: eine schematische Darstellung einer weiteren Ausführungsform einer Hydraulikanordnung für einen erfindungsgemäßen Antriebsstrang;
- Fig. 3: eine schematische Darstellung einer Schalt-Betätigungsanordnung für einen erfindungsgemäßen Kraftfahrzeug-Antriebsstrang;
- Fig. 4: eine schematische Darstellung einer weiteren Ausführungsform einer Hydraulikanordnung für einen erfindungsgemäßen Antriebsstrang;
- Fig. 5: eine schematische Darstellung einer weiteren Ausführungsform einer Hydraulikanordnung für einen erfindungsgemäßen Antriebsstrang;
- Fig. 6: eine schematische Darstellung einer weiteren Ausführungsform einer Hydraulikanordnung für einen erfindungsgemäßen Antriebsstrang;
- Fig. 7: eine schematische Darstellung einer weiteren Ausführungsform einer Hydraulikanordnung für einen erfindungsgemäßen Antriebsstrang;
- Fig. 8: eine schematische Darstellung einer weiteren Ausführungsform einer Hydraulikanordnung für einen erfindungsgemäßen Antriebsstrang;
- Fig. 9: eine weitere Ausführungsform einer Schalt-Betätigungsanordnung, wobei auch eine Parksperrenanordnung betätigbar ist;
- Fig. 10: eine schematische Darstellung einer weiteren Ausführungsform einer Hydraulikanordnung für einen erfindungsgemäßen Antriebsstrang;
- Fig. 11: eine schematische Darstellung einer weiteren Ausführungsform einer Hydraulikanordnung für einen erfindungsgemäßen Antriebsstrang, wobei zwei Pumpenaktuatoren zur Betätigung einer Doppelkupplungsanordnung vorgesehen sind;
- Fig. 12: eine weitere schematische Darstellung einer weiteren Ausführungsform einer Hydraulikanordnung und einer Schalt-Betätigungsanordnung für einen erfindungsgemäßen Kraftfahrzeug-Antriebsstrang; und
- Fig. 13: eine schematische Darstellung einer Ausführungsform einer erfindungsgemäßen Hydraulikanordnung mit einer Fluidkammeranordnung;
- Fig. 14: eine schematische Längsschnittansicht durch ein Doppelkupplungsgetriebe mit einer Hydraulikanordnung, die eine obenliegende Fluidkammeranordnung aufweist;
- Fig. 15: eine Teil-Längsschnittansicht durch ein Kraftfahrzeuggetriebegehäuse;
- Fig. 16: eine weitere Teil-Längsschnittansicht durch ein Kraftfahrzeuggetriebegehäuse;
- Fig. 17: eine schematische perspektivische Darstellung eines Kraftfahrzeuggetriebes mit einer weiteren Ausführungsform einer erfindungsgemäßen Hydraulikanordnung, die eine Fluidkammeranordnung mit mehreren Fluidkammern aufweist;
- Fig. 18: eine schematische Längsschnittansicht durch ein Kraftfahrzeuggetriebegehäuse mit einer Fluidkammeranordnung wie sie vergleichbar ist mit jener der Fig. 17; und
- Fig. 19: eine weitere Längsschnittansicht in schematischer Form durch ein Kraftfahrzeuggetriebegehäuse, mit einer Darstellung einer Verbindung von zwei Fluidkammern.

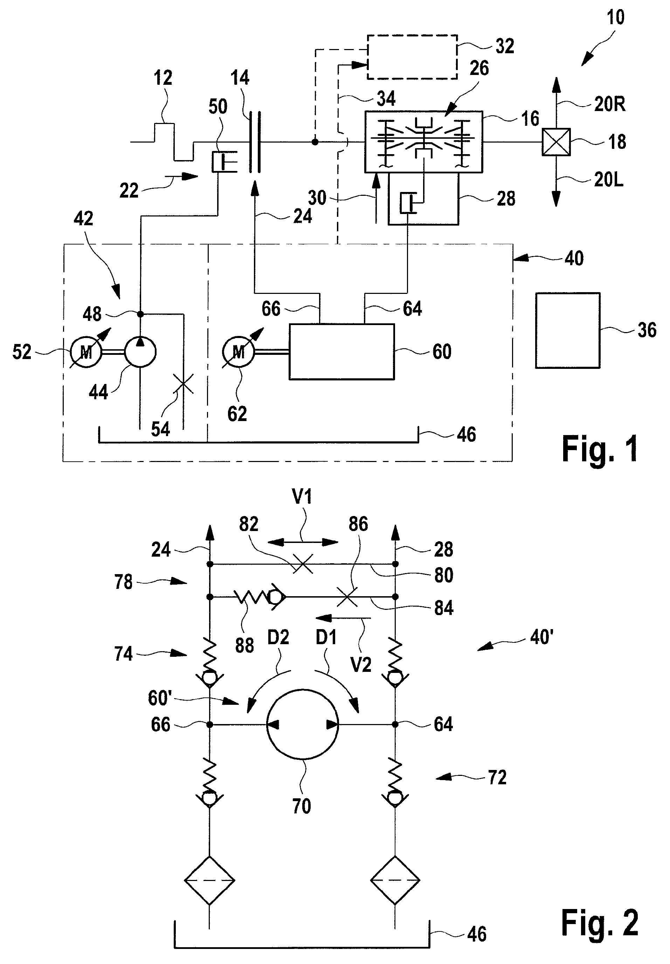

In Fig. 1 ist ein Antriebsstrang für ein Kraftfahrzeug schematisch dargestellt und generell mit 10 bezeichnet. Der Antriebsstrang 10 weist einen Antriebsmotor 12 auf, der bspw. als Verbrennungsmotor ausgebildet sein kann. Ferner beinhaltet der Antriebsstrang 10 eine Kupplungsanordnung 14, die als Einfachkupplung oder als Doppelkupplung ausgebildet sein kann. Die Kupplungsanordnung kann eine trockene Reibkupplung beinhalten, vorzugsweise beinhaltet die Kupplungsanordnung 14 jedoch wenigstens eine nasslaufende Reibkupplung wie eine Lamellenkupplung. Der Antriebsstrang 10 weist ferner eine Getriebeanordnung 16 auf. Die Getriebeanordnung 16 kann ein einfaches Getriebe mit mehreren Gangstufen in Vorgelegebauweise sein, kann jedoch auch aus zwei Teilgetrieben gebildet sein, um gemeinsam mit einer Doppelkupplungsanordnung ein Doppelkupplungsgetriebe zu bilden. Schließlich beinhaltet der Antriebsstrang 10 ein Differential 18, mittels dessen Antriebsleistung auf angetriebene Räder 20L, 20R verteilbar ist. Das Differential 18 kann in ein Gehäuse der Getriebeanordnung 16 integriert sein.

Die Kupplungsanordnung 14 und die Getriebeanordnung 16 sind vorzugsweise automatisiert betätigt. Der Kupplungsanordnung 14 ist zu diesem Zweck eine Kupplungs-Betätigungsanordnung 22 zugeordnet. Ferner ist der Kupplungsanordnung 14 eine Kupplungskühlungseinrichtung 24 zugeordnet, über die der Kupplungsanordnung 14 Fluid zum Zwecke des Kühlens und/oder Schmierens zugeführt werden kann.

Der Getriebeanordnung 16 ist eine Schaltanordnung 26 zugeordnet, die bspw. eines oder mehrere Schaltkupplungspakete aufweisen kann. Jedes Schaltkupplungspaket beinhaltet vorzugsweise eine oder zwei synchronisierte Schaltkupplungen, die in an sich bekannter Weise ausgebildet sein können. Ferner ist der Getriebeanordnung 16 eine Schalt-Betätigungsanordnung 28 zugeordnet, über die die Schaltanordnung 26 betätigbar ist, wobei die Schalt-Betätigungsanordnung 28 für jedes Schaltkupplungspaket bspw. einen Aktuator zum Betätigen einer Schaltmuffe eines solchen Schaltkupplungspaketes beinhalten kann. In manchen Fällen kann der Getriebeanordnung 16 auch eine separate Getriebekühlungseinrichtung 30 zugeordnet sein, über die Fluid in dem Gehäuse der Getriebeanordnung 16 gekühlt wird. Eine solche Getriebekühlungseinrichtung 30 kann bspw. eine Luftkühlung sein, kann jedoch auch eine Fluidkühlung sein, bspw. mittels eines Wärmetauschers oder dergleichen.

Der Antriebsstrang 10 kann ferner eine elektrische Maschine 32 beinhalten, die als weitere Antriebsmaschine ausgebildet ist. Die elektrische Maschine 32 ist vorzugsweise mit einem Eingang der Getriebeanordnung 16 verbunden, im Falle eines Doppelkupplungsgetriebes vorzugsweise mit dem Eingang von einem der Teilgetriebe eines solchen Doppelkupplungsgetriebes. Die elektrische Maschine kann auch im Generatorbetrieb arbeiten. Der elektrischen Maschine 32 ist vorzugsweise eine Maschinenkühlungseinrichtung 34 zugeordnet, über die der elektrischen Maschine 32 ein Kühlfluid bereitgestellt werden kann.

Teile des Antriebsstranges 10 sind, wie erläutert, automatisiert ausgeführt. Zu diesem Zweck ist eine elektronische Steueranordnung 36 vorgesehen, die bspw. ein Getriebesteuergerät beinhalten kann, mittels dessen Gangstufen der Getriebeanordnung 16 ein- und ausgelegt werden können und/oder eine Reibkupplung oder Reibkupplungen der Kupplungsanordnung 14 geöffnet oder geschlossen werden können, oder aber im Schlupfbetrieb betrieben werden können, sofern dies gewünscht ist.

In der Regel werden bestimmte Zustände des Antriebsstranges 10 über Sensoren erfasst, die jedoch in Fig. 1 aus Gründen einer übersichtlicheren Darstellung nicht gezeigt sind. Es versteht sich, dass solche Sensoren, bspw. zum Erfassen von Schaltpositionen der Schaltanordnung 26, mit der Steueranordnung 36 verbunden sind.

Der Antriebsstrang 10 beinhaltet ferner eine Hydraulikanordnung 40. Die Hydraulikanordnung 40 weist einen Pumpenaktuator 42 zum Betätigen einer Reibkupplung der Kupplungsanordnung 14 auf. Der Pumpenaktuator 42 beinhaltet eine Pumpe 44, deren Sauganschluss mit einem Fluidsumpf 46 verbunden ist. Der Fluidsumpf 46 kann ein eigener Fluidsumpf der Kupplungsanordnung 14 sein, ist jedoch vorzugsweise ein gemeinsamer Fluidsumpf der Kupplungsanordnung 14 und der Getriebeanordnung 16. Ein Druckanschluss der Pumpe 44 ist direkt, d.h. ohne Zwischenschaltung von Proportionalventilen, mit einem hydraulischen Kupplungszylinder 50 verbunden, der Bestandteil der Kupplungs-Betätigungsanordnung 22 ist. Die Pumpe 44 wird mittels eines elektrischen Pumpenaktuatormotors 52 angetrieben. Die Drehzahl und ggf. die Drehrichtung des Pumpenaktuatormotors 52 können über die Steueranordnung 36 gesteuert oder geregelt werden. In der Verbindung zwischen dem Druckanschluss 48 der Pumpe 44 und dem Kupplungszylinder 50 kann bspw. ein Drucksensor vorgesehen sein, der mit der Steueranordnung 36 verbunden ist. Der Druck in dem Kupplungszylinder 50 kann dann bspw. durch Regeln der Drehzahl des elektrischen Pumpenaktuatormotors 52 eingestellt werden. Zur Verbesserung der Regelbarkeit kann vorgesehen sein, den Druckanschluss 48 über eine Pumpenaktuatorblende 54 mit einem Niederdruckkreis zu verbinden, bspw. dem Fluidsumpf 46.

Die Hydraulikanordnung 40 weist ferner eine Pumpenanordnung 60 auf. Die Pumpenanordnung 60 ist mittels eines einzelnen Elektromotors 62 angetrieben. Der Elektromotor 62 ist hinsichtlich seiner Drehzahl und vorzugsweise auch hinsichtlich seiner Drehrichtung steuer- oder regelbar, wozu in der Steueranordnung 36 vorzugsweise eine geeignete Motorsteuerung und eine Motorendstufe vorgesehen sind. Die Pumpenanordnung 60 beinhaltet einen ersten Pumpenanschluss 64 und einen zweiten Pumpenanschluss 66. Der erste Pumpenanschluss 64 ist mit der Schalt-Betätigungsanordnung 28 verbunden. In der Schalt-Betätigungsanordnung 28 kann bspw. für jedes Schaltkupplungspaket ein separater Schaltzylinder vorgesehen sein, wobei der erste Pumpenanschluss 64 mit wenigstens einem der Schaltzylinder verbunden ist. Die Verbindung zwischen dem ersten Pumpenanschluss 64 und dem Schaltzylinder der Schalt-Betätigungsanordnung 28 beinhaltet vorzugsweise keine Proportionalventile oder dergleichen. Die Betätigung eines Schaltkupplungspaketes kann durch Einstellen der Drehzahl und/oder der Drehrichtung des Elektromotors 62 eingestellt werden.

Der zweite Pumpenanschluss 66 ist wiederum direkt, d.h. vorzugsweise ohne Zwischenschaltung eines Proportionalventils oder dergleichen, mit der Kupplungskühlungseinrichtung 24 verbunden. Über den zweiten Pumpenanschluss 64 kann folglich ein Kühlfluid bereitgestellt werden, um eine Reibkupplung der Kupplungsanordnung 14 zu kühlen.

Die Pumpenanordnung 60 ist in der Regel mit dem Fluidsumpf 46 verbunden, um Fluid daraus ansaugen zu können, obgleich dies in Fig. 1 nicht dargestellt ist. Der erste Pumpenanschluss 64 und der zweite Pumpenanschluss 66 werden von der Pumpenanordnung 60 vorzugsweise ausschließlich alternativ mit Fluid versorgt, so dass Fluid entweder für die Schalt-Betätigungsanordnung 28 oder für die Kupplungskühlungseinrichtung 24 bereitgestellt wird.

Obgleich der zweite Pumpenanschluss 66 vorliegend mit der Kupplungskühlungseinrichtung 24 verbunden ist, kann er alternativ oder zusätzlich auch mit der Getriebekühlungseinrichtung 30 und/oder der Maschinenkühlungseinrichtung 34 verbunden sein.

Die Pumpenanordnung 60 ist vorzugsweise dazu ausgelegt, an dem zweiten Pumpenanschluss 66 Fluid mit vergleichsweise geringem Druck und einem hohen Volumenstrom bereitzustellen. Vorzugsweise ist die Pumpenanordnung 60 dazu ausgelegt, an dem ersten Pumpenanschluss 64 Fluid mit einem vergleichsweise hohen Druck und einem vergleichsweise geringen Volumenstrom bereitzustellen.

Bei dem Antriebsstrang 10 ist es also möglich, mittels einer Pumpenanordnung 60, die von einem einzelnen Elektromotor 62 angetrieben wird, sowohl die Funktion einer Betätigung der Getriebeanordnung 16 zu realisieren, als auch die Funktion einer Kühlung einer zu kühlenden Anordnung, wie der Kupplungsanordnung 14, der Getriebeanordnung 16 und/oder der elektrischen Maschine 32. Die Schalt-Betätigungsanordnung 28 kann in manchen Fällen auch dazu ausgelegt sein, eine Parksperrenanordnung der Getriebeanordnung 16 zu betätigen.

Der Antriebsstrang kann folglich mit wenigen Komponenten realisiert werden. In der Steueranordnung 36 ergibt sich eine Reduzierung des Aufwandes, da nur eine Motorendstufe vorhanden sein muss. Auch hinsichtlich der Verkabelung (ein Getriebekabelbaum von der Steueranordnung 36 zu den einzelnen Anordnungen des Antriebsstranges) kann ebenfalls vereinfacht werden. Insgesamt ergibt sich eine Kosteneinsparung, eine Bauraumeinsparung und/oder eine Gewichtseinsparung, da für die zwei Funktionen nur eine elektrische Maschine bereitgestellt werden muss.

Nachstehend werden weitere Ausführungsformen von Antriebssträngen 10 bzw. Hydraulikanordnungen 40 beschrieben, die hinsichtlich Aufbau und Funktionsweise generell dem Antriebsstrang 10 der Fig. 1 bzw. der Hydraulikanordnung 40 der Fig. 1 entsprechen. Gleiche Elemente sind daher durch gleiche Bezugszeichen gekennzeichnet. Im Folgenden werden im Wesentlichen die Unterschiede erläutert.

Bei der in Fig. 2 gezeigten Hydraulikanordnung 40' ist die Schaltpumpenanordnung 60' durch eine bidirektionale Pumpe 70 gebildet, die in einer ersten Drehrichtung D1 oder in einer zweiten Drehrichtung D2 mittels des Elektromotors 62 angetrieben werden kann. Die bidirektionale Pumpe 70 kann bspw. als Innenzahnradpumpe ausgebildet sein. Die bidirektionale Pumpe 70 weist zwei Pumpenanschlüsse 64, 66 auf, die über eine erste Rückschlagventilanordnung 72 mit dem Fluidsumpf 46 verbunden sind. Ferner sind die Pumpenanschlüsse 64, 66 über eine zweite Rückschlagventilanordnung 74 mit der Schalt-Betätigungsanordnung 28 bzw. der Kupplungskühlungseinrichtung 24 verbunden. In der ersten Drehrichtung D1 wird Fluid aus dem Fluidsumpf 46 gefördert, und zwar über einen Fluidfilter, ein Rückschlagventil der ersten Rückschlagventilanordnung 72, den zweiten Pumpenanschluss 66. An dem ersten Pumpenanschluss 64 wird in der ersten Drehrichtung D1 Fluid unter Druck bereitgestellt, und zwar für die Schalt-Betätigungsanordnung 28. Das Fluid kann durch das Ventil der ersten Rückschlagventilanordnung 72 nicht in den Fluidsumpf 46 strömen. Durch die zweite Rückschlagventilanordnung 74 wird erreicht, dass über den zweiten Pumpenanschluss 66 kein Fluid aus der Kupplungskühlungseinrichtung 24 angesaugt wird. In der zweiten Drehrichtung D2 wird Fluid über den ersten Pumpenanschluss 64 angesaugt und unter Druck an dem zweiten Pumpenanschluss 66 für die Kupplungskühlungseinrichtung 24 bereitgestellt.

Vorliegend beinhaltet die Hydraulikanordnung 40' ferner eine optionale Blendenanordnung 78. Die Blendenanordnung 78 verbindet die Schalt-Betätigungsanordnung 28 und die Kupplungskühlungseinrichtung 24. Über die Blendenanordnung kann erreicht werden, dass dann, wenn an dem ersten Pumpenanschluss 64 Fluid bereitgestellt wird, wenigstens ein Teil des bereitgestellten Fluides auch der Kupplungskühlungseinrichtung 24 bereitgestellt wird. Umgekehrt kann dann, wenn die bidirektionale Pumpe 70 in der zweiten Drehrichtung D2 angetrieben wird, das an dem zweiten Pumpenanschluss 66 bereitgestellte Fluid zum Teil zu der Schalt-Betätigungsanordnung 28 geführt werden, obgleich dies in der Regel nur in bestimmten Situationen sinnvoll ist, wie sie nachstehend noch erläutert werden.

Die Blendenanordnung 78 kann eine einzelne Blende beinhalten, so dass ein Volumenstrom von 28 nach 24 gleich einem Volumenstrom von 24 nach 28 ist. Vorliegend ist die Blendenanordnung 78 jedoch asymmetrisch realisiert. Die Blendenanordnung 78 weist einen ersten Zweig 80 auf, in dem eine erste Ausgleichsblende 82 enthalten ist, über die ein Volumenstrom V1 strömen kann. In einem parallelen zweiten Zweig 84 sind eine zweite Ausgleichsblende 86 und ein Blendenanordnung-Rückschlagventil 88 angeordnet, derart, dass nur ein Volumenstrom V2 von 28 nach 24 strömen kann. Mit anderen Worten kann von 28 nach 24 ein Volumenstrom V1 + V2 strömen. In der entgegengesetzten Richtung kann nur ein Volumenstrom V1 strömen.

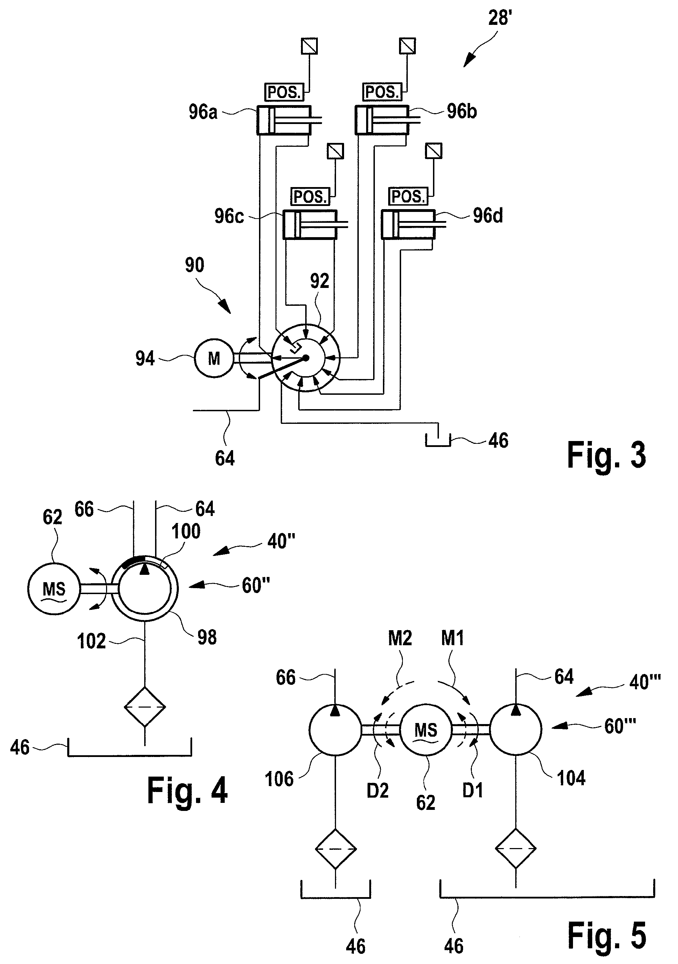

In Fig. 3 ist eine weitere Ausführungsform einer Schalt-Betätigungsanordnung 28' gezeigt. Die Schalt-Betätigungsanordnung 28' weist eine Verteilerventilanordnung 90 auf, deren Eingangsanschluss mit dem ersten Pumpenanschluss 64 verbunden ist. Die Verteilerventilanordnung 90 ist vorzugsweise, wie dargestellt, als Drehschieberventil 92 ausgebildet, das in zwei Drehrichtungen angetrieben werden kann, und zwar mittels eines elektrischen Drehschieberventilmotors 94. Die Schalt-Betätigungsanordnung 28 weist vorliegend vier Schalt-Hydraulikzylinder 96 auf. Die Schalt-Hydraulikzylinder 96a-96d können als einfach wirkende Hydraulikzylinder ausgebildet sein. In diesem Fall ist jeder Schalt-Hydraulikzylinder 96 mit einem Ausgangsanschluss der Verteilerventilanordnung 90 verbunden. Vorliegend sind die Schalt-Hydraulikzylinder 96 jedoch jeweils als doppelt wirkende Zylinder ausgebildet, so dass jeder Schalt-Hydraulikzylinder 96 über zwei Leitungen mit zwei jeweiligen Ausgangsanschlüssen der Verteilerventilanordnung 90 verbunden ist. Ein Kolben von jedem Schalt-Hydraulikzylinder 96 ist mit einem Betätigungsglied wie einer Schaltmuffe einer Schaltanordnung wie einem Schaltkupplungspaket verbunden. Die Position der Kolben der Schalt-Hydraulikzylinder 96a-96d sind über Positionssensoren erfassbar (POS). Wie es in Fig. 3 dargestellt ist, können alle Ausgangsanschlüsse vorzugsweise mit dem Fluidsumpf 46 verbunden sein, bis auf einen, der je nach Drehstellung des Drehschieberventils 92 mit dem Eingangsanschluss (d.h. mit dem ersten Pumpenanschluss 64) verbunden ist. Anstelle eines Drehschieberventils 92 kann die Verteilerventilanordnung 90 auch durch ein einzelnes oder eine Mehrzahl von linear schaltenden Wegeventilen realisiert sein. Das Drehschieberventil 92 ist von der Funktion her ein Wegeventil und kein Proportionalventil.

Der Drehschieberventilmotor 94 wird vorzugsweise ebenfalls von der Steueranordnung 36 angesteuert.

Fig. 4 zeigt eine weitere Ausführungsform einer Hydraulikanordnung 40", bei der eine Pumpenanordnung 60" eine Umschaltpumpe 98 beinhaltet. Die Umschaltpumpe 98 beinhaltet ein in Umfangsrichtung verschiebbares Umschaltglied 100 und weist einen dritten Pumpenanschluss 102 auf, der mit dem Fluidsumpf verbunden ist. In einer Stellung des Umschaltgliedes 100 ist der dritte Pumpenanschluss 102 mit dem ersten Pumpenanschluss 64 verbunden. In einer zweiten Umschaltstellung des Umschaltgliedes 100 ist der dritte Pumpenanschluss 102 mit dem zweiten Pumpenanschluss 66 verbunden. Das Umschalten des Umschaltgliedes 100 kann bspw. durch Fluidreibung erfolgen, also in Abhängigkeit von der Drehrichtung des Elektromotors 62 erfolgen.

Bei den Ausführungsformen der Figuren 2 und 4 weist die Pumpenanordnung 60 jeweils eine einzelne Pumpe auf bzw. ist durch eine einzelne Pumpe gebildet.

In den nachfolgenden Figuren 5 bis 8 ist jeweils vorgesehen, dass die Pumpenanordnung eine erste Pumpe 104 und eine zweite Pumpe 106 aufweist. Die zwei Pumpen 104, 106 werden gemeinsam von dem einzelnen Elektromotor 62 angetrieben, und zwar vorzugsweise gegensinnig.

Wie es in Fig. 5 gezeigt ist, wird bei einer ersten Drehrichtung M1 des Elektromotors 62 die erste Pumpe 104 in der ersten Drehrichtung D1 angetrieben, bei der die erste Pumpe 104 Fluid aus dem Fluidsumpf 46 saugt und Fluid an dem ersten Pumpenanschluss 64 bereitstellt. Bei der gleichen Drehrichtung M1 des Elektromotors 62 wird die zweite Pumpe 106 in der zweiten Drehrichtung D2 angetrieben, wodurch an dem zweiten Pumpenanschluss 66 kein Fluid bereitgestellt wird, ggf. sogar hieraus Fluid angesaugt wird. Wenn der Elektromotor 62 in der entgegengesetzten Drehrichtung M2 angetrieben wird, sind die Drehrichtungen der zwei Pumpen 104, 106 genau umgekehrt, so dass Fluid an dem zweiten Pumpenanschluss 66 bereitgestellt wird, und an dem ersten Pumpenanschluss 64 kein Fluid bereitgestellt wird.

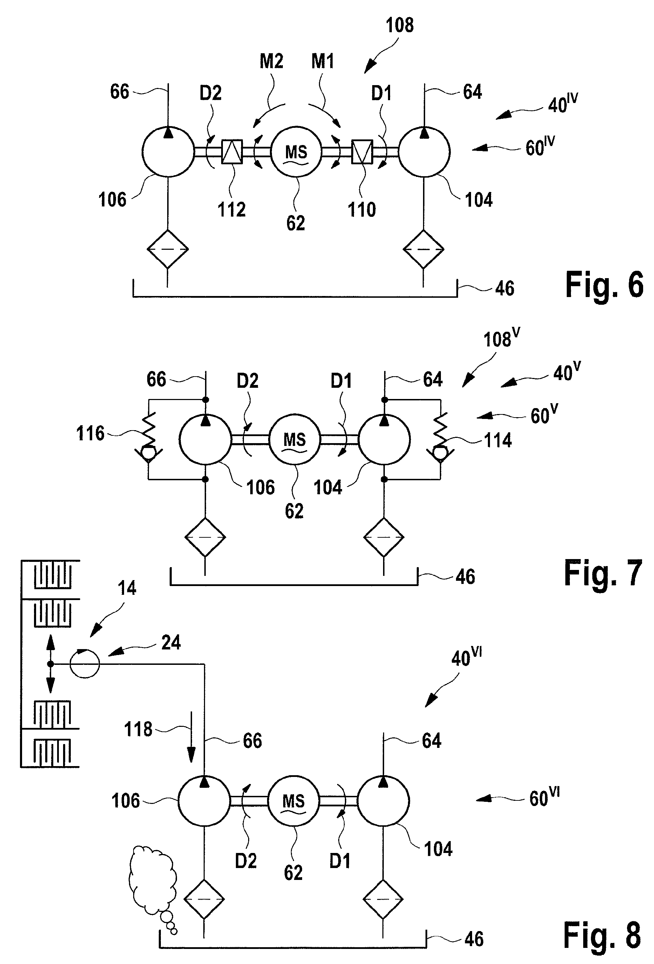

In den Figuren 6 bis 8 sind weitere Ausführungsformen von Hydraulikanordnungen 40 mit Pumpenanordnungen 60 gezeigt, die hinsichtlich Aufbau und Funktionsweise generell der Pumpenanordnung 60'" der Fig. 5 entsprechen. Gleiche Elemente sind daher durch gleiche Bezugszeichen gekennzeichnet. Im Folgenden werden im Wesentlichen die Unterschiede erläutert.

Bei der Pumpenanordnung 60^{IV} der Fig. 6 ist eine Rückflussverhinderungsvorrichtung 108 in Form einer Freilaufanordnung 110, 112 vorgesehen. Die Freilaufanordnung beinhaltet einen ersten Freilauf 110, der zwischen den Elektromotor 62 und die erste Pumpe 104 geschaltet ist, sowie einen zweiten Freilauf 112, der zwischen den Elektromotor 62 und die zweite Pumpe 106 geschaltet ist.

In der ersten Drehrichtung M1 des Elektromotors dreht folglich ein Eingangsglied des ersten Freilaufes 110. In dieser Drehrichtung ist der erste Freilauf 110 geschlossen, so dass die erste Pumpe 104 in der ersten Drehrichtung D1 angetrieben wird. In der gleichen Drehrichtung M1 ist der zweite Freilauf 112 jedoch geöffnet, so dass die zweite Pumpe 106 nicht angetrieben wird, wenn der Elektromotor 62 in der ersten Drehrichtung M1 angetrieben wird. Wenn der Elektromotor 62 in der zweiten Drehrichtung M2 angetrieben wird, ist der erste Freilauf 110 geöffnet, so dass die erste Pumpe 104 nicht angetrieben wird. Der zweite Freilauf 112 ist hingegen geschlossen, so dass die zweite Pumpe 106 angetrieben wird, um Fluid an dem zweiten Pumpenanschluss 66 bereitzustellen.

Durch die Rückflussverhinderungsvorrichtung 108 wird vermieden, dass dann, wenn an einem der zwei Pumpenanschlüsse 64, 66 Fluid bereitgestellt wird, Fluid aus dem anderen Pumpenanschluss zurückfließt bzw. zurückgesaugt wird.

In Fig. 7 ist eine Pumpenanordnung 60^{v} mit einer weiteren Ausführungsform einer Rückflussverhinderungsvorrichtung 108^{v} dargestellt. Hierbei sind die zwei Pumpen 104, 106 auf die gleiche Art und Weise an den Elektromotor 62 angebunden wie bei der Ausführungsform der Fig. 5. Die Rückflussverhinderungsvorrichtung 108^{v} beinhaltet vorliegend eine Bypassventilanordnung mit einem ersten Bypassventil 114, das in Form eines Rückschlagventils zwischen dem ersten Pumpenanschluss 64 und einem Sauganschluss der ersten Pumpe 104 angeschlossen ist. Ferner beinhaltet die Bypassventilanordnung ein zweites Bypassventil 116 in Form eines Rückschlagventils, das zwischen dem zweiten Pumpenanschluss 66 und einem Sauganschluss der zweiten Pumpe 106 angeschlossen ist. Bei der ersten Drehrichtung D1 des Elektromotors 62 bzw. der ersten Pumpe 104 wird Fluid an dem ersten Pumpenanschluss 64 bereitgestellt. Das erste Bypassventil 114 sperrt. Bei der gleichen Drehrichtung wird die zweite Pumpe 106 so angetrieben, dass der zweite Pumpenanschluss 66 als Sauganschluss wirkt. Über das zweite Bypassventil 116 wird dabei Fluid aus dem Fluidsumpf 46 angesaugt, die zweite Pumpe 106 quasi im hydraulischen Kurzschluss betrieben. In der zweiten Drehrichtung D2 ist es genau umgekehrt, das zweite Bypassventil 116 sperrt und das erste Bypassventil 114 ist geöffnet, so dass die erste Pumpe 104 im hydraulischen Kurzschluss betrieben wird.

Bei den zwei Ausführungsformen der Figuren 6 und 7 kann jeweils zum einen erreicht werden, dass Fluid nicht aus der Kupplungskühlungseinrichtung 24 oder der Schalt-Betätigungsanordnung 28 zurückgesaugt wird. Die Rückflussverhinderungsvorrichtungen 108 dienen jedoch auch dem Zweck, dass keine unnötige Verlustleistung über die jeweils nicht aktive Pumpe erzielt wird. Im Falle der Fig. 6 wird die jeweils nicht aktive Pumpe gar nicht angetrieben. Im Falle der Fig. 7 wird die jeweils nicht aktive Pumpe im Kurzschluss betrieben, so dass keine signifikante Leistung erforderlich ist.

Bei der Ausführungsform der Fig. 8 ist eine Pumpenanordnung 60^{vi} vorgesehen, die vom Aufbau her der Pumpenanordnung 60ⁱⁱⁱ der Fig. 5 entspricht. Wenn der Elektromotor in der ersten Drehrichtung D1 angetrieben wird, um Fluid an dem ersten Pumpenanschluss 64 bereitzustellen, wird die zweite Pumpe 106 in der entgegengesetzten Richtung angetrieben, so dass Fluid aus der Kupplungskühlungseinrichtung 24 zurückgesaugt wird, und zwar in Richtung hin zu dem Fluidsumpf. Hierdurch kann eine Entlüftungsfunktion realisiert werden.

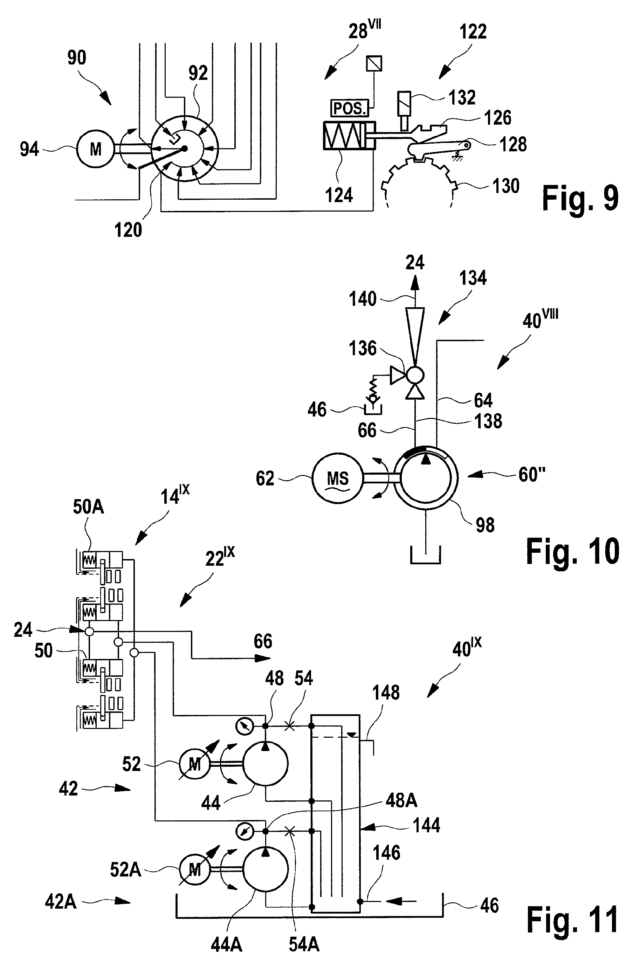

Fig. 9 zeigt eine weitere Ausführungsform einer Schalt-Betätigungsanordnung 28^{vii}. Diese entspricht hinsichtlich Aufbau und Funktionsweise generell der Schalt-Betätigungsanordnung 28' der Fig. 3. Gleiche Elemente sind daher durch gleiche Bezugszeichen gekennzeichnet. Im Folgenden werden im Wesentlichen Unterschiede erläutert.

Bei der Schalt-Betätigungsanordnung 28^{vii} weist das Drehschieberventil 92 einen weiteren Anschluss in Form eines Parksperrenanschlusses 120 auf. Der Parksperrenanschluss 120 ist mit einer Parksperrenanordnung 122 verbunden, genauer mit einem Anschluss eines Parksperren-Hydraulikzylinders 124, der als einfach wirkender Zylinder ausgebildet ist. Der Parksperren-Hydraulikzylinder 124 weist einen Positionssensor auf, der mit der Steueranordnung 36 verbunden ist. Die Parksperrenanordnung 122 weist ein mit dem Kolben des Parksperren-Hydraulikzylinders 124 verbundenes Klinkenbetätigungsglied 126 auf, mittels dessen eine Parksperrenklinke 128 betätigt werden kann, die in einer Parksperrenposition in eine Zahnlücke eines Parksperrenrades 130 greift, wie es im Stand der Technik an sich bekannt ist. Zum Einrichten einer Parksperrenposition und/oder einer Freigabeposition der Parksperrenanordnung 122 kann eine Parksperrenverriegelung 132 vorgesehen sein, die bspw. mittels eines Solenoids angesteuert wird.

In Fig. 10 ist eine weitere Ausführungsform einer Hydraulikanordnung 40^{viii} gezeigt, die hinsichtlich Aufbau und Funktionsweise der Hydraulikanordnung 40ⁱⁱ der Fig. 4 entspricht, jedoch auch aufgebaut sein kann wie eine der Hydraulikanordnungen 40' der Fig. 2 oder eine der Hydraulikanordnungen der Figuren 5 bis 8. In jedem Fall ist hierbei vorgesehen, dass der zweite Pumpenanschluss 66 über eine Strahlpumpe 134 mit der Kupplungskühlungseinrichtung 24 verbunden ist. Genauer gesagt ist ein Sauganschluss 136 der Strahlpumpe 134 mit dem Fluidsumpf 46 verbunden, vorzugsweise über eine Rückschlagventilanordnung. Ein Treibanschluss 138 der Strahlpumpe 134 ist mit dem zweiten Pumpenanschluss 66 verbunden. Ein Strahlpumpenauslass 140 der Strahlpumpe 134 ist mit der Kupplungskühlungseinrichtung 24 verbunden.

Über die Strahlpumpe 134 kann erreicht werden, dass auch bei Verwendung von nur einer einzelnen Pumpe 70 oder 98 bei Bereitstellung von Fluid an dem zweiten Pumpenanschluss 66 ein vergleichsweise großer Volumenstrom zur Kühlung bereitgestellt werden kann. In dem Zweig, der mit dem ersten Pumpenanschluss 64 verbunden ist, ist ein hoher Volumenstrom hingegen nicht erforderlich, da insbesondere die Schalt-Betätigungsanordnung keine hohen Volumenströme benötigt. Demzufolge ist in diesem Zweig keine Strahlpumpe vorhanden.

In Fig. 11 ist eine weitere Ausführungsform einer Hydraulikanordnung 40^{ix} gezeigt. Die Hydraulikanordnung 40^{ix} beinhaltet einen ersten Pumpenaktuator 42, der aufgebaut sein kann wie bei der Ausführungsform der Fig. 1 und zur Betätigung einer ersten Reibkupplung (mittels Kupplungszylinder 50) einer Doppelkupplungsanordnung 14^{ix} dient. Die Hydraulikanordnung 40^{ix} beinhaltet ferner einen zweiten Pumpenaktuator 42A, der identisch aufgebaut sein kann wie der erste Pumpenaktuator 42 und zur Betätigung einer zweiten Reibkupplung (mittels eines zweiten Kupplungszylinders 50A) der Kupplungsanordnung 14^{ix} dient.

Bei der Hydraulikanordnung 40^{ix} sind die Sauganschlüsse der Pumpen 44, 44A nicht direkt mit einem Fluidsumpf 46 verbunden, sondern mit einem Trockensumpftank 144. In gleicher Weise sind die Druckanschlüsse 48, 48A über die jeweiligen Blenden 54, 54A ebenfalls mit dem Trockensumpftank 144 verbunden. Über den Trockensumpftank 144 kann bspw. erreicht werden, dass die Pumpen 44, 44A jeweils im Wesentlichen entschäumtes Hydraulikfluid ansaugen, da Lufteinschlüsse in angesaugtem Fluid der Pumpenaktuatoren 42, 42A nachteilig für die Regelung des Druckes in den Kupplungszylindern sind. Der Trockensumpftank 144 weist hierbei einen Tankeinlass 146 auf, der am Boden des Trockensumpftankes ausgebildet sein kann, jedoch auch in einem oberen Abschnitt ausgebildet sein kann. Ferner weist der Trockensumpftank 144 einen Tanküberlauf 148 auf.

In dem Trockensumpftank 144 können Saugfilter für die Sauganschlüsse der Pumpen 44, 44A enthalten sein, sowie ein Druckfilter für den Zulauf (bei 146). Ferner kann eine Blende für mindestens den Zulauf vorgesehen sein.

Die Hydraulikanordnung 40^{ix} kann in manchen Ausführungsformen dazu ausgebildet sein, den Trockensumpftank 144 schnell zu befüllen, wie es nachstehend noch erläutert werden wird.

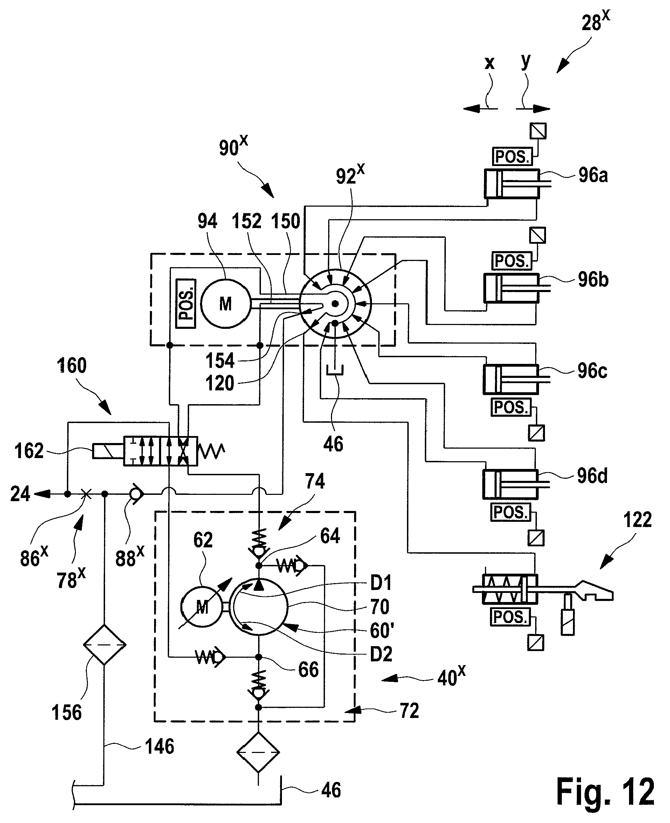

In Fig. 12 ist eine weitere Ausführungsform einer Schalt-Betätigungsanordnung 28^{x} sowie eine Ausführungsform einer Hydraulikanordnung 40^{x} dargestellt.

Die Schalt-Betätigungsanordnung 28^{x} entspricht dem Grunde nach der Betätigungsanordnung 28^{vii} der Fig. 9. Im Unterschied dazu weist die in der Schalt-Betätigungsanordnung 28^{x} verwendete Verteilerventilanordnung 90^{x} zwei Druckanschlüsse auf, nämlich einen ersten Druckanschluss 150 und einen zweiten Druckanschluss 152. Bei Ausführung der Verteilerventilanordnung 90^{x} mit einem Drehschieberventil 92^{x} beinhaltet dieses die zwei Druckanschlüsse 150, 152 in Umfangsrichtung benachbart zueinander, derart, dass zwei Ausgangsanschlüsse für einen Schalt-Hydraulikzylinder (z.B. 96a) mit den zwei Druckanschlüssen 150, 152 verbunden werden können. Die anderen Ausgangsanschlüsse des Drehschieberventils, die den Schalt-Hydraulikzylindern 96a-96d zugeordnet sind, sind im Normalfall mit dem Fluidsumpf verbunden und folglich entlastet.

Die Verteilerventilanordnung 90^{x} beinhaltet zusätzlich zu den Anschlüssen für die Schalt-Hydraulikzylinder 96a-96d (im vorliegenden Fall acht Anschlüsse) einen Anschluss 120 zum Betätigen einer Parksperrenanordnung 122, wie bei der Ausführungsform der Fig. 9. Zusätzlich hierzu weist die Verteilerventilanordnung 90^{x} einen weiteren Anschluss in Form eines Zusatzanschlusses 154 auf. Der Zusatzanschluss 154, der in der Darstellung der Fig. 12 beispielhaft mit dem zweiten Druckanschluss 152 verbunden ist, ist über eine Blendenanordnung 78^{x} mit der Kupplungskühlungseinrichtung 24 verbunden. Die Blendenanordnung 78^{x} beinhaltet dabei in Richtung von dem Zusatzanschluss 154 zu der Kupplungskühlungseinrichtung 24 ein Rückschlagventil 88^{x} und eine Blende 86^{x}.

Ein Abschnitt zwischen dem Rückschlagventil 88^{x} und der Blende 86^{x} ist über ein Druckfilter 156 mit dem Tankeinlass 146 verbunden, der in Fig. 11 dargestellt ist.

Der Zusatzanschluss 154 ist bei der Verteilerventilanordnung 90^{x} der Fig. 12 jedoch optional. In anderen Fällen kann der Trockensumpftank 144 auch auf andere Art und Weise befüllt werden.

Auch ist es optional, über den Zusatzanschluss 154 Fluid der Kupplungskühlungseinrichtung 24 über die Blende 86^{x} bereitzustellen.

Die Hydraulikanordnung 40^{x} beinhaltet ferner eine Vorschaltventilanordnung 160 in Form eines Wegeventils, das in eine Richtung vorgespannt ist und mittels eines Solenoids 162 zwischen wenigstens zwei Schaltstellungen bewegbar ist. Die Vorschaltventilanordnung 160 ist vorliegend als 5/2-Wegeventil ausgebildet, mit zwei Eingangsanschlüssen und drei Ausgangsanschlüssen. Ein Eingangsanschluss ist mit dem ersten Pumpenanschluss 64 verbunden. Der andere Eingangsanschluss ist mit dem zweiten Pumpenanschluss 66 verbunden (jeweils über ein Ventil einer zweiten Rückschlagventilanordnung 74), denn im vorliegenden Fall ist die Pumpenanordnung 60 der Hydraulikanordnung 40^{x} identisch ausgebildet wie die Pumpenanordnung 60' der Fig. 2.

Der erste Eingangsanschluss der Vorschaltventilanordnung 160 ist je nach Schaltstellung entweder mit dem ersten Druckanschluss 150 oder mit dem zweiten Druckanschluss 152 verbunden. In einer ersten Schaltstellung, in die das 5/2-Wegeventil vorgespannt ist, ist der erste Pumpenanschluss 64 mit dem ersten Druckanschluss 150 verbunden. In der zweiten Schaltstellung ist der erste Pumpenanschluss 64 mit dem zweiten Druckanschluss 152 verbunden. Der zweite Eingangsanschluss des 5/2-Wegeventils ist in der ersten Schaltstellung mit der Kupplungskühlungseinrichtung 24 verbunden. In der zweiten Schaltstellung ist der erste Eingangsanschluss der Vorschaltventilanordnung 160, d.h. der zweite Pumpenanschluss 66, von der Kupplungskühlungseinrichtung 24 getrennt.

Das Drehschieberventil 92^{x} weist folglich zehn Anschlüsse auf, mit doppeltem Druckanschluss und genereller Entlastung der passiven Schalt-Hydraulikzylinder hin zu dem Fluidsumpf 46. Ein neunter Anschluss 120 ist der Parksperrenanordnung 122 zugeordnet. Ein zehnter Anschluss 154 kann bei entsprechender Drehrichtung der Pumpe 70 und bei entsprechender Schaltstellung der Vorschaltventilanordnung 160 sowie bei entsprechender Drehstellung des Drehschieberventils 92^{x} zur Schnellbefüllung des Trockensumpftankes 144 verwendet werden. Die Vorschaltventilanordnung 160 ist vorzugsweise so ausgebildet, dass der zweite Druckanschluss 152 an dem Drehschieberventil 92 immer entlastet ist, wenn der Solenoid 162 nicht mit Strom versorgt wird. Wenn die Vorschaltventilanordnung 160 hingegen durch Bestromen des Solenoid 162 in die weitere Schaltstellung versetzt wird, wird der erste Druckanschluss 150 entlastet. Dies kann bei einem Fehlerfall während eines Auslegens der Parksperrenanordnung 122 verwendet werden. Bei dem Auslegen der Parksperrenanordnung 122 wird der an den neunten Anschluss 120 angeschlossene Zylinder der Parksperrenanordnung 122 befüllt. Dies erfolgt, während der Solenoid 162 nicht mit Strom versorgt wird und die Pumpenanordnung 60' in der ersten Drehrichtung D1 angetrieben wird (wobei das Drehschieberventil 92^{x} entsprechend geschaltet ist). Wenn nun bei einem solchen Fehlerfall die Fehlerreaktion "möglichst schneller Abbruch und schnelles Wiedereinlegen der Parksperrenanordnung" gewünscht ist, kann dies durch Bestromen des Solenoids 162 erreicht werden. In diesem Fall wird nämlich der bei der ersten Drehrichtung D1 bereitgestellte Volumenstrom in Richtung hin zum zweiten Druckanschluss 152, und folglich zu der Kühlung umgeleitet. Hierdurch kann der Kolben des Zylinders der Parksperrenanordnung 122 entlastet werden, um einen schnellen Abbruch des Parksperren-Auslegens zu erreichen. Dies kann insbesondere bei tiefen Temperaturen von Vorteil sein.

Ferner ist es durch die Ausgestaltung der Vorschaltventilanordnung 160 möglich, dass dieses Ventil die Bewegungsrichtung der Kolben der Schalt-Hydraulikzylinder 96 schaltet.

In allen Fällen versteht sich, dass an dem Drehschieberventil vorzugsweise ein Positionssensor vorgesehen ist (POS), der mit der Steueranordnung 36 verbunden ist.

Die verschiedenen Funktionen, die mit der Hydraulikanordnung 40^{x} und mit der Schalt-Betätigungsanordnung 28^{x} erreichbar sind, sind in der nachfolgenden Tabelle der Übersichtlichkeit halber zusammengefasst:

| | 70 | 162 | 150 | 152 | 96a-d | 120 | 154 |
|---|---|---|---|---|---|---|---|
| Schalten nach links | D1 | 0 | 1 | - | x | 0 | 0 |
| Schalten nach rechts | D1 | 1 | - | 1 | y | 0 | 0 |
| Parksperrenbetätigung | D1 | 0 | 1 | - | 0 | 1 | 0 |
| Befüllen Tank | D1 | 1 | - | 1 | 0 | 0 | 1 |
| Kupplungskühlen | D2 | 0 | - | - | 0 | 0 | 0 |

Die Richtungen der Kolben der Schalt-Hydraulikzylinder 96 sind in Fig. 12 mit x (Schalten nach links) und y (Schalten nach rechts) dargestellt.

D1 bedeutet ein Antreiben der Pumpenanordnung 60' in der ersten Drehrichtung. D2 bedeutet ein Antreiben in der entgegengesetzten Drehrichtung. Bei 162 bedeutet eine 0, dass der Solenoid 162 stromlos ist. Eine 1 bedeutet, dass der Solenoid 162 bestromt ist, die Vorschaltventilanordnung 160 also die zweite Schaltstellung einnimmt. Bei 150 bedeutet eine 1, dass dort Fluid unter Druck bereitgestellt wird. Ein Strich (-) bedeutet, dass der jeweilige Druckanschluss drucklos ist. Gleiches gilt für die Spalte 152. In der Spalte 96a-d bezieht sich x auf die Schaltrichtung nach links. y bezieht sich auf die Schaltrichtung nach rechts. Eine 0 bedeutet, dass die Schaltstellung der Schalt-Hydraulikzylinder irrelevant ist. In der Spalte 120 bedeutet eine 1, dass an dem Ausgangsanschluss Hydraulikfluid unter Druck bereitgestellt wird. Eine 0 bedeutet, dass kein Druck bereitgestellt wird. Bei dem Zusatzanschluss 154 bedeutet eine 1, dass an diesem Anschluss Fluid bereitgestellt wird. Eine 0 bedeutet, dass an diesem Anschluss 154 entweder kein Fluid bereitgestellt wird oder aber Fluid bereitgestellt wird, die Funktion ist offen und hängt von der Drehstellung des Drehschiebers ab.

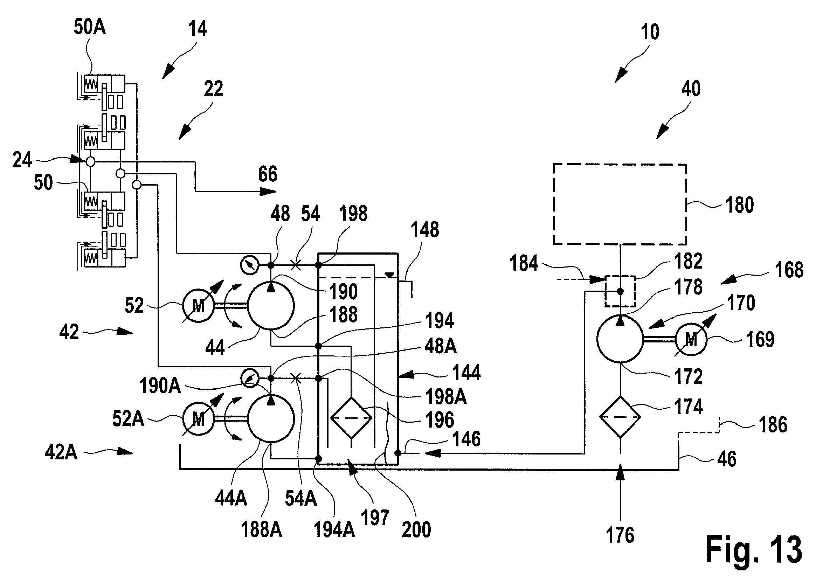

In den Figuren 13 bis 19 sind Ausführungsformen von Kraftfahrzeugantriebssträngen 10 bzw. Hydraulikanordnungen 40 hierfür gezeigt, bei denen in einem Gehäuse ein Fluidsumpf 46 zur Aufnahme eines Hydraulikfluides ausgebildet ist, mit einer Verbraucherpumpe 44, die einen ersten Verbraucherpumpenanschluss zum Ansaugen von Hydraulikfluid und einen zweiten Verbraucherpumpenanschluss zum Abgeben von Hydraulikfluid an wenigstens einen Fluidverbraucher 50 aufweist, wobei innerhalb des Fluidsumpfes 46 eine Ansaugposition zum Ansaugen von Hydraulikfluid aus dem Fluidsumpf 46 definiert ist. An dem Gehäuse ist eine Fluidkammeranordnung 144 angeordnet, deren Funktion beispielsweise jenem des Trockensumpftankes der Fig. 11 entsprechen kann und die einen Füllanschluss 146 zum Befüllen der Fluidkammeranordnung 144 mit Hydraulikfluid und wenigstens einen Entnahmeanschluss aufweist, der mit dem ersten Verbraucherpumpenanschluss verbunden ist. Eine Füllpumpenanordnung, die beispielsweise die Pumpenanordnung 60' der Fig. 12 beinhalten kann, weist einen ersten Füllpumpenanschluss auf, der mit einer Ansaugeinrichtung verbunden ist, die an der Fluidsumpf-Ansaugposition angeordnet ist. Die Füllpumpenanordnung weist einen zweiten Füllpumpenanschluss auf, der mit dem Füllanschluss 146 der Fluidkammeranordnung 144 verbunden ist. Soweit die Funktion des Trockensumpftankes 144 der Fig. 11 mit jener der Fluidkammeranordnung 144 der Figuren 13 bis 19 übereinstimmt, werden übereinstimmende Bezugszeichen verwendet.

Fig. 13 zeigt eine Hydraulikanordnung 40, die ähnlich aufgebaut ist wie die Hydraulikanordnung 40^{IX} der Fig. 11 bzw. die Hydraulikanordnung 40^{X} der Fig. 12, wobei der Füllanschluss 146 (Tankeinlass) mit einer Füllpumpenanordnung 168 verbunden ist, die ausschließlich zum Befüllen der Fluidkammeranordnung 144 vorgesehen sein kann, jedoch auch weitere Funktionen beinhalten kann, wie es nachstehend noch beschrieben werden wird.

Die Füllpumpenanordnung 168 weist einen elektrischen Füllpumpenmotor 169 auf, der eine Füllpumpe 170 antreibt, die einen ersten Füllpumpenanschluss 172 aufweist, der über ein Fluidfilter 174 mit einer nicht näher bezeichneten Ansaugeinrichtung verbunden ist, die an einer Fluidsumpf-Ansaugposition 176 des Fluidsumpfes 46 Fluid ansaugt. Der Fluidsumpf 46 kann weitgehend als Trockensumpf ausgebildet sein, in den in erster Linie Spritzöl von Wänden eines Gehäuses 186 des Getriebes abtropft. Daher ist es möglich, dass die Füllpumpe 170 an der Fluidsumpf-Ansaugposition 176, bei der es sich vorzugsweise bereits um die optimale Ansaugposition des Fluidsumpfes handelt, ein Gemisch aus Fluid und Luft ansaugt.

Die Füllpumpe 170 weist ferner einen zweiten Füllpumpenanschluss 178 auf, der mit dem Füllanschluss 146 der Fluidkammeranordnung 144 verbunden ist. Bei Antreiben der Füllpumpe 170 wird folglich die Fluidkammeranordnung 144 mit Fluid und ggf. Luft befüllt, wobei die Luft nach oben steigen kann.

In Fig. 13 ist ferner gezeigt, dass der zweite Füllpumpenanschluss 178 zusätzlich mit einem Niederdruckkreislauf 180 verbunden sein kann, bei dem es sich beispielsweise um eine Einspritzschmierung für Zahnräder, Lager oder dergleichen handeln kann, bei der es sich jedoch auch um einen Kühlkreislauf handeln kann.

Der Niederdruckkreislauf 180 kann jedoch auch eine Gangschalt-Aktuatorik beinhalten, wie es beispielsweise in Fig. 12 gezeigt ist.

Der zweite Füllpumpenanschluss 178 kann dabei über eine Verteilereinrichtung 182 mit dem Niederdruckkreislauf 180 und der Fluidkammeranordnung 144 verbunden sein. Die Verteilereinrichtung 182 kann beispielsweise mit einem Steueranschluss 184 verbunden sein, über den die Verteilereinrichtung 182 so angesteuert wird, dass ein von der Füllpumpe 170 bereitgestellter Volumenstrom auf einen Füllvolumenstrom zum Füllanschluss 146 und einen Niederdruckvolumenstrom zum Niederdruckkreislauf 180 aufgeteilt wird, insbesondere bedarfsweise aufgeteilt wird.

Die Verteilereinrichtung 182 kann beispielsweise eine Wegeventileinrichtung beinhalten, wie sie in Fig. 12 bei 160 gezeigt ist.

Der Niederdruckkreislauf 180 kann, wie oben erwähnt, Niederdruckverbraucher beinhalten, wie beispielweise Schmier- oder Kühlkreisläufe. Der Niederdruckkreislauf kann jedoch auch solche Verbraucher beinhalten, die als Aktuatoren ausgebildet sind, wie beispielsweise die Zylinder 96 der Fig. 12. Im Gegensatz zu den Verbrauchern 50 in Form von Reibkupplungen wird der Druck am zweiten Füllpumpenanschluss 178 jedoch nicht gemessen oder geregelt. Sofern ein Aktuator mit dem zweiten Füllpumpenanschluss 178 in dem Niederdruckkreislauf 180 verbunden ist, wird dessen Position geregelt, nicht dessen Druck.

Wie bereits oben erwähnt, beinhaltet der Antriebsstrang 10 der Fig. 13 ein Gehäuse 186, das beispielsweise als Getriebebehäuse ausgebildet sein kann, innerhalb dessen der Fluidsumpf 46 ausgebildet ist.

Die Pumpe 44 ist als Verbraucherpumpe ausgebildet. Der Druckanschluss 48 der Verbraucherpumpe 44 ist mit einem nicht näher bezeichneten Druckmessgerät verbunden. Die Verbraucherpumpe 44 saugt über einen ersten Verbraucherpumpenanschluss 188 in Form eines Sauganschlusses Hydraulikfluid aus der Fluidkammeranordnung 144 an und gibt Hydraulikfluid an dem Druckanschluss 48, der auch als zweiter Verbraucherpumpenanschluss 190 bezeichnet werden kann, unter Druck ab. Der Sauganschluss 188 ist über einen Entnahmeanschluss 194 der Fluidkammeranordnung 144 mit einer Ansaugposition 197 im Inneren, insbesondere im Bereich des Bodens der Fluidkammeranordnung 144 verbunden, ggf. über ein Fluidfilter 196.

Der Druckanschluss 48 ist über eine Blende 54 mit einem Rücklaufanschluss 198 der Fluidkammeranordnung 144 verbunden.

Die Anschlüsse, über die Hydraulikfluid in die Fluidkammeranordnung 144 zugeführt wird, insbesondere der Füllanschluss 146 und ggf. der Rücklaufanschluss 198, können oberhalb und/oder unterhalb eines normalen Füllniveaus der Fluidkammeranordnung 144 angeordnet sein. Das normale Fluidniveau innerhalb der Fluidkammeranordnung 144 wird vorzugsweise über die Höhe des Tanküberlaufs 148 definiert, wie es in Fig. 13 gezeigt ist.

Fig. 13 zeigt ferner, dass auch die weitere Pumpe 44A in gleicher Weise an die Fluidkammeranordnung 144 angeschlossen ist, d.h. über einen Entnahmeanschluss 194A und einen Rücklaufanschluss 198A. Weitere Pumpen können Fluid aus der Fluidkammeranordnung 144 ansaugen, wenn Bedarf hierfür besteht.

Innerhalb der Fluidkammeranordnung 144 ist es denkbar, mittels eines Schwallbleches 200 oder dergleichen dafür zu sorgen, dass der Ansaugbereich, aus dem die Pumpen ansaugen, nicht durch zuströmendes Fluid gestört wird, wie es in Fig. 13 schematisch angedeutet ist.

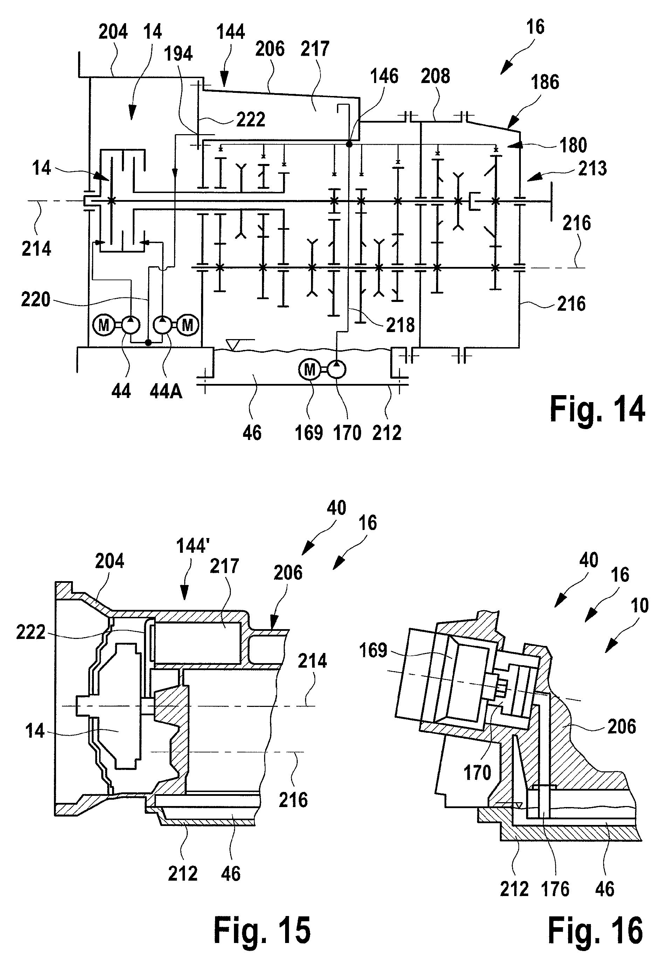

In den Fig. 14 bis 19 sind weitere Ausführungsformen von Hydraulikanordnungen bzw. Antriebssträngen dargestellt, die hinsichtlich Aufbau und Funktionsweise generell dem Antriebsstrang bzw. der Hydraulikanordnung der Fig. 13 entsprechen. Gleiche Elemente sind daher durch gleiche Bezugszeichen gekennzeichnet. Im Folgenden werden im Wesentlichen die Unterschiede erläutert.

In Fig. 14 ist ein Antriebsstrang dargestellt, bei dem ein Gehäuse 186 ein Kupplungsgehäuse 204, ein erstes Getriebegehäuse 206, das an das Kupplungsgehäuse 204 angeflanscht ist, ein zweites Getriebegehäuse 208, das an das erste Getriebegehäuse 206 gegenüberliegend dem Kupplungsgehäuse 204 angeflanscht ist, und einen Getriebegehäusedeckel 210 aufweist, der mit dem zweiten Getriebegehäuse 208 verbunden ist.

In dem Gehäuse 186 ist eine Ölwanne 212 ausgebildet. In der Ölwanne 212 ist ein Fluidsumpf 46 ausgebildet, aus dem die Füllpumpe 170 ansaugt. Die Füllpumpe 170 und der Füllpumpenmotor 169 können in der Ölwanne 212 angeordnet sein, um direkt hieraus Fluid ansaugen zu können.

Ferner ist in dem Kupplungsgehäuse 204 eine Doppelkupplungsanordnung 14 dargestellt. In dem Getriebegehäuse 206, 208, 210 sind schematisch diverse Radsätze zur Einrichtung von Gangstufen dargestellt, wobei die Radsätze insgesamt mit 213 bezeichnet sind. Die Radsätze 213 verbinden jeweils eine Eingangswellenachse 214 mit einer Vorgelegewellenachse 216. Die Vorgelegewellenachse 216 kann über einen Konstanten-Radsatz mit einer Ausgangswelle verbunden sein, die koaxial zu der Eingangswellenachse 214 ausgerichtet ist, wie es in Fig. 14 schematisch angedeutet ist.

Fig. 14 zeigt ferner, dass das erste Getriebegehäuse 206 eine Fluidkammer 217 einer Fluidkammeranordnung 144 definiert. Die Fluidkammer 217 ist durch eine Ausbuchtung in dem ersten Getriebegehäuse 206 ausgebildet und ist bei 146 über eine Steig-Verbindungsleitung 218 mit der Füllpumpe 170 verbunden, so dass die Fluidkammer 217 mittels der Füllpumpe 170 befüllt werden kann. Ferner weist die Fluidkammer 217 einen Entnahmeanschluss 194 auf, der über eine Fall-Verbindungsleitung 220 mit einer Verbraucherpumpe 44 und einer weiteren Verbraucherpumpe 44A verbunden ist. Ggf. können auch zwei parallele Verbindungsleitungen 220 vorgesehen sein, die an jeweiligen Entnahmeanschlüssen 194 angreifen.

Die Fluidkammer 217 kann als axiale Ausbuchtung in dem Getriebegehäuse 206 ausgebildet sein, die beispielsweise durch einen Deckel 222 verschlossen ist.

In den Fig. 15 bis 19 sind weitere Ausführungsformen von Getriebeanordnungen 16 bzw. Hydraulikanordnungen 40 dargestellt, die hinsichtlich Aufbau und Funktionsweise generell der Hydraulikanordnung bzw. dem Antriebsstrang der Fig. 14 entsprechen. Gleiche Elemente sind daher durch gleiche Bezugszeichen gekennzeichnet. Im Folgenden werden im Wesentlichen die Unterschiede erläutert.

In Fig. 15 ist gezeigt, dass die Ölwanne 212, die den Fluidsumpf 46 definiert, im Bereich eines Übergangs zwischen dem Kupplungsgehäuse 204 und dem Getriebegehäuse 206 mit dem Kupplungsgehäuse 204 oder dem Getriebegehäuse 206 verbunden sein kann.

Fig. 15 zeigt ferner schematisch die Fluidkammer 217, bei der es sich um die einzige Fluidkammer 217 der Fluidkammeranordnung 144' handeln kann. Die Fluidkammer 217 ist durch einen Deckel 222 abgedichtet.

Fig. 16 zeigt eine weitere schematische Schnittansicht durch einen weiteren Teil des Getriebes 16 bzw. Antriebsstranges 10. Es ist zu erkennen, dass in dem ersten Getriebegehäuse 206 ein nicht näher bezeichneter Kanal ausgebildet ist, über den die Fluidsumpf-Ansaugposition 176 mit der Füllpumpe 170 verbunden ist, die im vorliegenden Fall oberhalb des Fluidsumpfes 46 angeordnet ist, mit einer Achse schräg zur Längsachse. Koaxial zu der Füllpumpe 170 ist an dem Getriebegehäuse 206 der Füllpumpenmotor 169 angeordnet, der die Füllpumpe 170 antreibt.

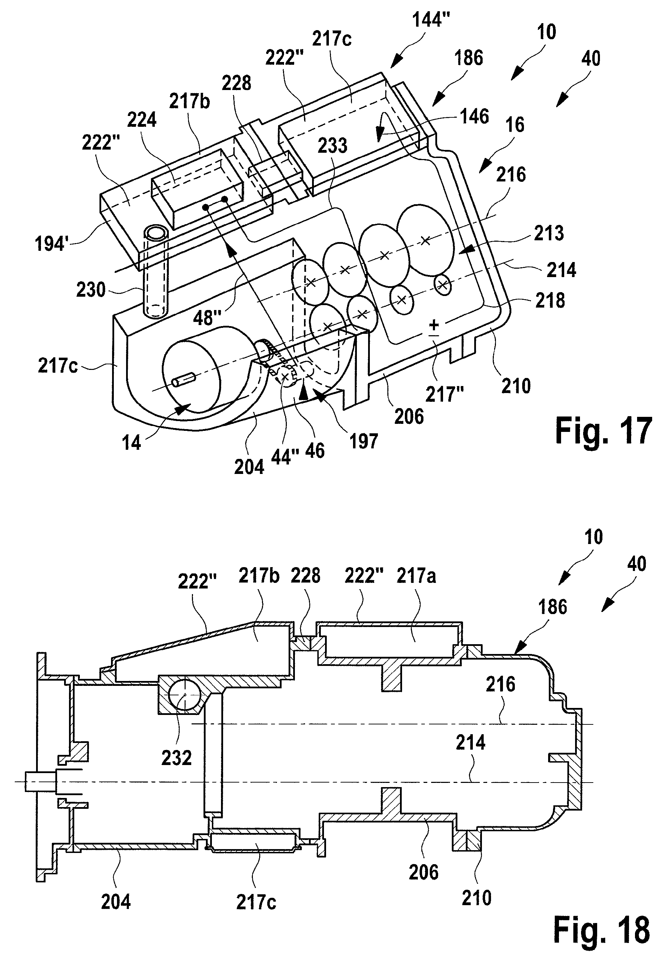

In den Fig. 17 und 18 ist eine weitere Ausführungsform eines Antriebsstranges 10 bzw. einer Hydraulikanordnung 40 gezeigt. Es ist zu erkennen, dass die Fluidkammeranordnung 144 drei Fluidkammern 217a, 217b und 217c aufweist. Die erste Fluidkammer 217a und die zweite Fluidkammer 217b sind oberhalb von Radsätzen 213 angeordnet. Die erste Fluidkammer 217a ist höher angeordnet als die zweite Fluidkammer 217b. Der Hydraulikanordnung 40 ist ferner ein Hydraulikmodul 224 zugeordnet, das beispielsweise oberhalb der zweiten Fluidkammer 217b angeordnet sein kann. Die erste Fluidkammer 217a und die zweite Fluidkammer 217b sind über einen ersten Verbindungskanal 228 miteinander verbunden. Die zweite Fluidkammer 217b und die erste Fluidkammer 217a können jeweils als axiale Ausbuchtungen ausgebildet sein, wie sie in Fig. 14 oder Fig. 15 dargestellt sind. Vorliegende sind diese jedoch gebildet durch radiale Ausbuchtungen in dem Gehäuse 186 und sind durch jeweilige Deckel 222" von oben verschlossen.

In Fig. 17 ist ferner zu erkennen, dass die zweite Fluidkammer 217b über einen zweiten Verbindungskanal 230 mit der dritten Fluidkammer 217c verbunden ist. Die dritte Fluidkammer 217c ist durch ein im Querschnitt U-förmiges Bauteil gebildet, das bspw. aus Kunststoff hergestellt sein kann und die Kupplungsanordnung 14 und/oder einen Teil der Radsätze 213 von unten umgibt und hierdurch im Bereich des Fluidsumpfes aufgrund des Volumens Fluid verdrängt. Folglich kann das Getriebe 16 selbst bei einer Bauart für große und drehmomentstarke Kraftfahrzeuge mit relativ wenig Fluid betrieben werden. Die dritte Fluidkammer 217c kann in einer alternativen Ausgestaltung durch eine entsprechende Modellierung im Gehäuse 186 ausgebildet sein. Ferner kann die dritte Fluidkammer 217c durch ein Bauteil aus Aluminium gebildet sein.

In Fig. 17 ist zu erkennen, dass die Verbraucherpumpe 44" an einer Ansaugposition 197 innerhalb der dritten Fluidkammer 217c Fluid zum Betrieb der Kupplung 14 ansaugt. Die Verbraucherpumpe 44" ist in diesem Fall beispielsweise in Form eines Nebenantriebs mit einer Eingangswelle gekoppelt, muss also bei dieser Ausführungsform nicht notwendigerweise über einen Elektromotor angetrieben sein. Hierbei kann ein Druckanschluss 48 der Verbraucherpumpe 44" ggf. über eine Regel-Ventilanordnung mit einem zugeordneten Kupplungszylinder 50 verbunden sein.

Dies ist in Fig. 17 bei 48" gezeigt, schematisch dargestellt durch eine Verbindungsleitung zwischen der Verbraucherpumpe 44" und dem Hydraulikmodul 224, innerhalb dessen eine solche Ventilanordnung vorgesehen sein kann.

Überschüssiges Öl aus dem Hydraulikmodul 224 wird über eine Rücklaufleitung 233 in Richtung des Fluidsumpfes zurückgeführt, wo eine Füllpumpe 170" Fluid entweder direkt von der Rücklaufleitung 233 und/oder von einem Fluidsumpf ansaugt und über eine Verbindungsleitung 218 der ersten Fluidkammer 217a zuführt, und zwar über einen Füllanschluss 146. Die Füllpumpe 170" kann als Strahlpumpe ausgebildet sein.

Von dort strömt das Fluid über den ersten Verbindungskanal 228 in die zweite Fluidkammer 217b, und von dort über den zweiten Verbindungskanal 230 in die dritte Fluidkammer 217c, von wo das Fluid dann wieder von der Verbraucherpumpe 44" (und/oder einer weiteren Verbraucherpumpe) angesaugt wird.

Die Kammern 217a, 217b, 217c sind vorzugsweise vollständig geschlossene Kammern, wobei zumindest eine der Kammern mit einem Überlauf 148 ausgestattet sein kann, insbesondere die erste Hydraulikkammer 217a. Wenigstens eine der Kammern, insbesondere alle drei Kammern sind zum Radsatzraum hin entlüftet, so dass die Kammer bzw. alle Kammern zur Beruhigung und Ausgasung des Fluides genutzt werden können.

Fig. 18 zeigt einen Längsschnitt eines beispielhaften Gehäuses 186 des Getriebes der Fig. 17, aus dem die Anordnung der ersten Fluidkammer 217a und der zweiten Fluidkammer 217b hervorgeht, die durch jeweilige Deckel 222" verschlossen sind.

Ferner ist in Fig. 18 die Lage einer ersten Abtriebsachse 232 oberhalb der Achsen 214, 216 zu erkennen. Die zweite Fluidkammer 217b liegt vorzugsweise direkt oberhalb dieser ersten Abtriebsachse 232. Bei der ersten Abtriebsachse 232 handelt es sich vorzugsweise um eine Hinterachse des Kraftfahrzeuges.

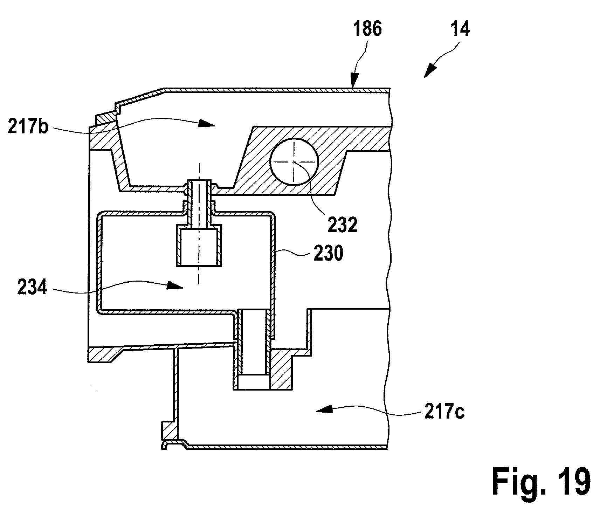

Fig. 19 zeigt eine weitere Darstellung des Gehäuses 186 der Fig. 18, aus der hervorgeht, dass die zweite Kammer 217b teilweise auch neben der ersten Abtriebsachse 232 angeordnet sein kann. Im vorliegenden Fall ist die zweite Kammer 217b über einen zweiten Verbindungskanal 230 mit der dritten Kammer 217c verbunden, wobei der zweite Verbindungskanal 230 eine Zwischenkammer 234 definiert.

In der Zwischenkammer 234 kann z. B. ein Schwimmerventil integriert sein, durch das ein Ölzufluss aus den Kammern 217b und 217a gestoppt wird, wenn die Verbraucherpumpe 44 aus der Kammer 217c kein Fluid absaugt (z.B. in einem Segelbetrieb bei stehendem Verbrennungsmotor). Auf diese Weise kann das in den Kammern 217a und 217b enthaltene Fluidvolumen weiterhin als Reserve genutzt werden.

## Patentansprüche

1. Kraftfahrzeug-Antriebsstrang (10) mit einer Kupplungsanordnung (14), mit einer Getriebeanordnung (16), die mehrere Gangstufen aufweist, die mittels einer Schaltanordnung (26) ein- und auslegbar sind, und mit einer Hydraulikanordnung (40) zum Betätigen der Schaltanordnung (26) und zum Bereitstellen von Kühlfluid, wobei die Hydraulikanordnung (40) eine Pumpenanordnung (60) aufweist, die mittels eines einzelnen Elektromotors (62) angetrieben ist und einen ersten Pumpenanschluss (64) und einen zweiten Pumpenanschluss (66) aufweist, wobei der erste Pumpenanschluss (64) mit einer Schalt-Betätigungsanordnung (28) verbindbar oder verbunden ist, um die Schaltanordnung (26) zu betätigen,
**dadurch gekennzeichnet, dass**
der zweite Pumpenanschluss (66) mit einer zu kühlenden Anordnung (14; 16, 32) verbindbar oder verbunden ist, um der zu kühlenden Anordnung (14; 16, 32) Kühlfluid bereitzustellen.

2. Antriebsstrang nach Anspruch 1, **dadurch gekennzeichnet, dass** die Schalt-Betätigungsanordnung (28) wenigstens einen Hydraulikzylinder (96a-96d) aufweist, der über eine Verteilerventilanordnung (90) mit dem ersten Pumpenanschluss (64) verbunden ist.

3. Antriebsstrang nach einem der Ansprüche 1 - 2, **dadurch gekennzeichnet, dass** die Pumpenanordnung (60) eine einzelne Pumpe (70; 98) aufweist, die so ausgebildet ist, dass in einer ersten Drehrichtung (D1) des Elektromotors (62) Fluid an dem ersten Pumpenanschluss (64) bereitgestellt wird und in einer zweiten Drehrichtung (D2) Fluid an dem zweiten Pumpenanschluss (66) bereitgestellt wird.

4. Antriebsstrang nach Anspruch 3, **dadurch gekennzeichnet, dass** die einzelne Pumpe eine bidirektionale Pumpe (70) ist, die über eine Ventilanordnung (72) mit einem Fluidreservoir (46) verbunden ist und/oder über eine Ventilanordnung (74) mit der Schalt-Betätigungsanordnung (28) und/oder der zu kühlenden Anordnung (14; 16, 32) verbunden ist.

5. Antriebsstrang nach Anspruch 3, **dadurch gekennzeichnet, dass** die einzelne Pumpe (98) einen dritten Pumpenanschluss (102) aufweist, der mit einem Fluidreservoir (46) verbunden ist, und/oder als Umschaltpumpe (98) in Abhängigkeit von der Umschaltstellung eines Umschaltgliedes (100) Fluid entweder an dem ersten Pumpenanschluss (64) oder an dem zweiten Pumpenanschluss (66) bereitstellt.

6. Antriebsstrang nach einem der Ansprüche 1 - 2, **dadurch gekennzeichnet, dass** die Pumpenanordnung (60) eine erste Pumpe (104) und eine zweite Pumpe (106) aufweist, die gemeinsam von dem Elektromotor (62) angetrieben sind, wobei vorzugsweise eine Rückflussverhinderungsvorrichtung (108) verhindert, dass die Pumpenanordnung (60) Fluid aus der Schalt-Betätigungsanordnung (28) und/oder aus der zu kühlenden Anordnung (14; 16, 32) zurücksaugt.

7. Antriebsstrang nach Anspruch 6, **dadurch gekennzeichnet, dass** die Rückflussverhinderungsvorrichtung (108) eine Freilaufanordnung (110, 112) aufweist, die eine richtungsabhängige Freilauffunktion zwischen dem Elektromotor (62) und der ersten Pumpe (104) und/oder zwischen dem Elektromotor (62) und der zweiten Pumpe (106) einrichtet, und/oder wobei die Rückflussverhinderungsvorrichtung (108) eine Bypassventilanordnung (114, 116) aufweist, die eine richtungsabhängige Bypassfunktion für die erste Pumpe (104) und/oder die zweite Pumpe (106) einrichtet.

8. Antriebsstrang nach einem der Ansprüche 1 - 7, **dadurch gekennzeichnet, dass** der erste und/oder der zweite Pumpenanschluss (64, 66) über eine Vorschaltventilanordnung (160) mit der Schalt-Betätigungsanordnung (28) bzw. mit der zu kühlenden Anordnung (14; 16, 32) verbunden ist, wobei die Vorschaltventilanordnung (160) vorzugsweise so ausgebildet ist, dass in einer Vorschaltventilstellung der Vorschaltventilanordnung (160) Fluid einem Betätigungsanschluss der Schalt-Betätigungsanordnung (28) und/oder der zu kühlenden Anordnung (14; 16, 32) bereitgestellt werden kann.

9. Verfahren zum Betreiben eines Kraftfahrzeug-Antriebsstranges (10) nach einem der Ansprüche 1 - 8, mit dem Schritt, durch Wechseln der Drehrichtung (D1, D2) des Elektromotors (62) Fluid der Schalt-Betätigungsanordnung (28) oder der zu kühlenden Anordnung (14; 16, 32) bereitzustellen.

10. Kraftfahrzeugantriebsstrang-Hydraulikanordnung, insbesondere für einen Antriebsstrang (10) nach einem der Ansprüche 1-8, mit:
- einem Gehäuse (186), in dem ein Fluidsumpf (46) zur Aufnahme eines Hydraulikfluides ausgebildet ist,
- einer Verbraucherpumpe (44), die einen ersten Verbraucherpumpenanschluss (188) zum Ansaugen von Hydraulikfluid und einen zweiten Verbraucherpumpenanschluss (190) zum Abgeben von Hydraulikfluid an wenigstens einen Fluidverbraucher (50) aufweist,
wobei innerhalb des Fluidsumpfes (46) eine Ansaugposition (176) zum Ansaugen von Hydraulikfluid aus dem Fluidsumpf (46) definiert ist,
**dadurch gekennzeichnet, dass**
an dem Gehäuse (186) eine Fluidkammeranordnung (144) angeordnet ist, die einen Füllanschluss (146) zum Befüllen der Fluidkammeranordnung (144) mit Hydraulikfluid und wenigstens einen Entnahmeanschluss (194) aufweist, der mit dem ersten Verbraucherpumpenanschluss (188) verbunden ist, wobei eine Füllpumpenanordnung (168) einen ersten Füllpumpenanschluss (172) aufweist, der mit einer Ansaugeinrichtung verbunden ist, die an der Fluidsumpf-Ansaugposition (176) angeordnet ist, und wobei die Füllpumpenanordnung (168) einen zweiten Füllpumpenanschluss (178) aufweist, der mit dem Füllanschluss (146) der Fluidkammeranordnung (144) verbunden ist.

11. Hydraulikanordnung nach Anspruch 10, **dadurch gekennzeichnet, dass** die Füllpumpenanordnung (168) ferner mit wenigstens einem Niederdruckkreislauf (180) wie einem Schmier- oder Kühlkreislauf verbunden ist, und/oder wobei die Füllpumpenanordnung (168) dazu ausgebildet ist, einen Füllpumpenvolumenstrom bereitzustellen, der in einen Füllvolumenstrom und einen Niederdruckvolumenstrom aufgeteilt ist, insbesondere dazu ausgebildet ist, einen Füllpumpenvolumenstrom bedarfsweise in einen Füllvolumenstrom und einen Niederdruckvolumenstrom aufzuteilen.

12. Hydraulikanordnung nach einem der Ansprüche 10 bis 11, **dadurch gekennzeichnet, dass** die Fluidkammeranordnung (144') wenigstens eine Fluidkammer (217, 217a, 217b) aufweist, die oberhalb von wenigstens einem Radsatz (213) eines Kraftfahrzeuggetriebes (16) des Antriebsstranges (10) angeordnet ist.

13. Hydraulikanordnung nach einem der Ansprüche 10 bis 12, **dadurch gekennzeichnet, dass** an dem Gehäuse (186) wenigstens zwei Fluidkammern (217a, 217b, 217c) angeordnet sind, die über einen Verbindungskanal (228, 230) miteinander verbunden sind, wobei vorzugsweise eine erste Fluidkammer (217a) höher angeordnet ist als eine zweite Fluidkammer (217b, 217c), wobei der Füllanschluss (146) an der ersten Fluidkammer (217a) ausgebildet ist und/oder ein Entnahmeanschluss (194) an der zweiten Fluidkammer (217b, 217c) ausgebildet ist.

14. Hydraulikanordnung nach einem der Ansprüche 10 bis 13 oder nach dem Oberbegriff des Anspruchs 10, **dadurch gekennzeichnet, dass** an dem Gehäuse (186) eine Fluidkammeranordnung (144) ausgebildet ist, aus der die Verbraucherpumpe (44) Hydraulikfluid ansaugt, wobei die geometrische Form der Fluidkammeranordnung (144) und/oder die Anordnung der Fluidkammeranordnung (144) in Bezug auf das Gehäuse (186) dazu eingerichtet ist, dass die Verbraucherpumpe (44) keine Luft ansaugt.

15. Verfahren zum Betreiben eines Kraftfahrzeugantriebsstranges, insbesondere eines Kraftfahrzeugantriebsstranges nach einem der Ansprüche 1 bis 8, wobei der Kraftfahrzeugantriebsstrang eine Hydraulikanordnung (40) mit einer Verbraucherpumpe (44) zur Versorgung eines Verbrauchers (50) mit Hydraulikfluid aufweist, insbesondere eine Hydraulikanordnung (40) nach einem der Ansprüche 10 bis 14, mit den Schritten:
- Ansaugen von Hydraulikfluid aus einem Fluidsumpf (46) des Kraftfahrzeuggetriebsstranges, wobei der Fluidsumpf (46) in einem Gehäuse des Kraftfahrzeugantriebsstranges ausgebildet ist,
- Zuführen des Hydraulikfluides zu dem Verbraucher (50),
wobei das Hydraulikfluid mittels einer Füllpumpe (170) aus dem Fluidsumpf (46) angesaugt und in eine Fluidkammeranordnung (144) gefördert wird und wobei eine Verbraucherpumpe (44) Hydraulikfluid aus der Fluidkammeranordnung (144) ansaugt und dem Verbraucher (50) zuführt.
